(19) Europäisches Patentamt
European Patent Office
Office européen des brevets

(11) EP 3 582 183 A1

(12) # EUROPEAN PATENT APPLICATION

(43) Date of publication:
**18.12.2019 Bulletin 2019/51**

(21) Application number: **18177112.2**

(22) Date of filing: **11.06.2018**

(51) Int Cl.:
***G06T 7/521** (2017.01)* ***G06T 7/55** (2017.01)*
***G06T 7/38** (2017.01)* ***G06T 7/33** (2017.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FRAUNHOFER-GESELLSCHAFT zur Förderung der angewandten Forschung e.V.
80686 München (DE)**

(72) Inventors:
- **PAK, Alexey
76131 Karlsruhe (DE)**
- **HÖFER, Sebastian
76131 Karlsruhe (DE)**
- **BURKE, Jan
76131 Karlsruhe (DE)**

(74) Representative: **Schenk, Markus et al
Schoppe, Zimmermann, Stöckeler
Zinkler, Schenk & Partner mbB
Patentanwälte
Radlkoferstrasse 2
81373 München (DE)**

(54) ## DEFLECTOMETRIC TECHNIQUES

(57) There is described an apparatus (50, 52, 110, 160) for deriving properties of an object (53) on the basis of:
- a sequence (170) of reference patterns (70) displayed by a reference device (56), the sequence of reference patterns (70) being displayed at subsequent time instants by the reference device (56) so that light emitted by the reference device (56) is incident on the object (53);
- a sequence (190) of images (90), the images (90) being obtained at time instants from the light emitted by the reference device (56) according to the reference patterns (70) and transported to a sensing device (54) via optical paths (57a, 57b, 57', 57", 58"') which involve inner and/or outer reflections from the surface (53a, 53b) and/or propagation through the volume of the object (53),
the apparatus being configured, for at least one image pixel position in each of the images (90) of the sequence (190) of images (90), to:
- perform a processing of images to obtain a similarity function (121) between:
◦ a plurality of reference codes, each reference code being associated to one reference pixel position in the reference patterns, each reference code carrying information on the evolution of the optical radiation intensity of the reference device position (p) modulated by the value of the reference pattern pixel at the reference pixel position during the time instants; and
◦ an acquired code associated to the image pixel position, the acquired code carrying information on the evolution, in the sequence of images, of the optical radiation intensity acquired for the image pixel position;

- find (122):
◦ at least one peak in the similarity function, the peak being a local peak or a global peak between the values of the similarity function; and
◦ for at least one found peak, a maximizing reference pixel position (93, 94) associated to the at least one peak; and

- for each found peak (123):
◦ associate the maximizing reference pixel position to the image pixel position.

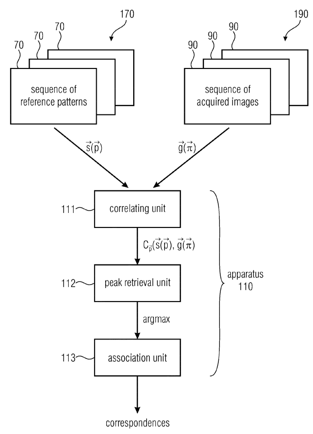


Fig. 11

EP 3 582 183 A1

## Description

### Technical field

Examples here refer, inter alia, to deflectometric techniques.

Examples here refer to apparatus, systems and methods for deriving properties of an object, e.g., by using optical techniques.

For example, methods and apparatus for dense optical encoding of surface points in the presence of shifted signal admixtures using band-limited stochastic patterns are disclosed.

### Background

High-resolution digital cameras enable sophisticated measurement techniques that facilitate numerous applications in the fields of computer vision and optical metrology. For example, deflectometry [10] (Fig. 1) may be sensitive to shape variations of specular and transparent objects in the range of nanometers, which is comparable to the performance of interferometers [3]. Camera-based methods rely on a precise understanding of the view ray geometry.

**Camera-to-world point correspondences.** The geometry of camera imaging can be mathematically described as a projective mapping from 3D world points of an observed scene to 2D image points (Fig. 2). By learning the properties of this mapping, one can characterize the scene, the camera, and the medium between them. This principle is employed to perform such fundamental tasks as camera calibration, camera pose estimation, object size measurements, etc.

Typically, one studies a camera mapping by employing special calibration objects with some identifiable point-like features whose 3D positions are known. By detecting these features in the camera image, one establishes a number of point correspondences $\vec{\pi} \to \vec{p}$ between the camera pixel positions $\vec{\pi} = (u, v)^T$ and the respective 3D feature locations $\vec{p} = (x,y,z)^T$.

**Checkerboard pattern identification.** One of ubiquitous examples of this strategy uses flat checkerboard patterns [5] in which cell corners can be reliably and accurately detected using common edge detection algorithms (Fig. 3). This method, implemented e.g. in the popular OpenCV library [1], is fast and robust against moderate camera distortions, illumination and exposure variations. However, due to its heuristic nature, it cannot produce any uncertainty estimates for the results, and it fails for severely distorted or defocused images. As the output dataset, from a single image of a static calibration board one obtains a *sparse* set of *N isolated* correspondences $\{\vec{\pi}_i \to \vec{p}_i\}_{i=1}^{N}$, where $N \sim O(10^1 ... 10^2)$.

**Active screens technique.** Sparse sets of a few dozen isolated points per image are not sufficient for more demanding metrological applications such as deflectometry. In such cases, it is beneficial to use flat screens instead of static calibration objects and display special "coding" patterns without changing the scene or moving the camera (the approach known as the method of active screens / active targets [9]). This way, each screen pixel transmits a sequence of values encoding its position on the screen. When the sequence for each camera pixel is decoded, one usually obtains a *dense* set of correspondences $\{\vec{\pi} \to \vec{p}\}$, $\vec{\pi} \in \Omega$, where the region $\Omega$ of the decoded camera pixels in the sensor space may be as large as the entire frame.

**Cosine phase-shifted pattern sequences (CPSPSs).** One realization of the active screens technique uses patterns modulated by a cosine function along the x- or y-direction (Figs. 4, 1). A pattern sequence usually contains several phase shifts for each period of the modulation function and uses cosines of several periods to facilitate the unambiguous decoding. In addition to a dense dataset, the method may deliver an estimate of the decoding uncertainty $\delta\vec{p}$ [4] and even an estimate of the local modulation transfer function (blurring kernel) in each pixel [7]. Since the decoding is performed in each pixel independently, it is robust with respect to arbitrary distortions and rather strong blurring (depending on the parameters of the coding patterns).

### Formulation of typical problems

Let us consider a problem of deflectometric characterization of a specular surface as in Fig. 5a. For a mirror surface, in each camera pixel a CPSPS encodes a single point on the coding screen. Upon decoding, this information is sufficient to recover the shape of the reflective surface. In the first approximation, the relation between the coding screen intensity $s(\vec{p})$ at some point $\vec{p}$ and the gray value $g(\vec{\pi})$ in the respective camera pixel $\vec{\pi}$ is linear, i.e.

$$g(\vec{\pi}) = A + B\, s(\vec{p}) + \delta g, \qquad (1)$$

where $\delta g$ is the random noise term, and $A$, $B$ are some (unknown) coefficients.

In case the object is transparent as in Fig. 5b, the value observed in a camera pixel is a mixture of overlapping signals originating in several distinct screen points:

$$g(\vec{\pi}) = A + B_1\, s(\vec{p}_1) + B_2\, s(\vec{p}_2) + \cdots + B_n\, s(\vec{p}_n) + \delta g, \qquad (2)$$

with $\vec{p}_1, \ldots, \vec{p}_n$ being some distinct points on the screen, and $A$, $B_1, \ldots, B_n$ some (unknown) coefficients.

An example of such camera image (a black-and-white checkerboard pattern reflecting from a glass lens) is shown in Fig. 6. Fig. 6 shows a checkerboard pattern 60 reflecting in a plano-convex lens. The back-side and the front-side reflections clearly overlap, preventing the identification of the cell corners.

In order to study the two reflecting surfaces of this lens, one has to allow for dense multi-valued point correspondences according to Eq. 2, i.e. one needs to determine

$$\{\vec{\pi} \rightarrow [\vec{p}_1, \ldots, \vec{p}_n]\}, \vec{\pi} \in \Omega. \qquad (3)$$

Prior art

There is presently no satisfactory solution to decode multi-valued point correspondences in the formulation as described above.

When studying transparent objects with non-sensitive surfaces, one practical approach may be to suppress the secondary reflections appearing in a setup as in Fig. 5b by e.g. immersing one side of the object into a liquid with a matching refractive index or by painting the secondary surface with an absorbing substance. For a non-contact (and nondestructive) measurement, one may switch to a different spectral range - e.g., in UV light, the secondary reflection in a lens would disappear. This is, however, inconvenient - UV cameras are expensive, and no common technology to produce arbitrary UV patterns exists.

In the visual spectrum, as can be deduced from Fig. 6, heuristics such as checkerboard detection are not reliable in the presence of overlapping signals. The CPSPSs without modifications are also inapplicable. As may be easily established, the naive decoding of a mixed signal as in Eq. 2 will produce unpredictable and therefore useless results.

In 2009, Faber et al [2] suggested a solution to this problem based on CPSPSs with a large number of spatial wavelengths (much higher than in common applications) and a modified decoding scheme based on numerical optimization. Although the details of their method were not disclosed, they reported on a successful extraction of the dominant reflected signal contribution in the presence of a double signal overlapping (i.e. the produced result was the set of mappings $\{\vec{\pi} \rightarrow \vec{p}_1\}$ in terms of Eq. 2 with $n = 2$ and $B_1 \geq B_2$ for each pixel).

In that paper, the method was shown to suffer from numerical instabilities and decoding failures in the regions where the respective screen points were not sufficiently well separated (i.e., $|\vec{p}_1 - \vec{p}_2|$ was below some minimum value). The uncertainty of the decoding was not characterized, and the possible effects from triple or quadruple signal overlaps were not discussed.

As detailed in the following Sections, the present techniques may exploit stochastic band-limited patterns. Such patterns have already been studied in optical metrology. In the context of pattern-projection techniques, Wiegmann et al [11] and later Schaffer et al [8] introduced band-limited stochastic patterns and evaluated their advantages compared to pre-existing coding methods. Their main goal was to replace slow digital projectors with alternative projecting devices (stochastic patterns can be generated very fast using certain analog techniques such as diffusing of laser speckle distributions).

Both these teams focused on applying stochastic patterns to 3D surface measurement of diffuse objects using pattern projection and therefore were only interested in single-valued (camera-pixel-to-camera-pixel) point correspondences. Applications of stochastic patterns to specular surfaces or transparent objects and the extraction of multi-valued point correspondences have not been investigated by these teams, nor, in fact, by anyone else before.

Bibliography

[1] G. Bradski. Dr. Dobb's Journal of Software Tools, 2000.

[2] C. Faber, M. Knauer, and G. Häusler. Can deflectometry work in presence of parasitic reflections? Vol. A10 (110.

Tagung) of Proc. DGAO, pages 1-2, 2009.
[3] C. Faber, E. Olesch, R. Krobot, and G. Häusler. Deflectometry challenges interferometry; the competition gets tougher! Proc. SPIE 8493 Interferometry XVI: Techniques and Analysis, pages 84930R-84930R-15, 2012.
[4] M. Fischer, M. Petz, and R. Tutsch. Vorhersage des Phasenrauschens in optischen Messsystemen mit strukturierter Beleuchtung. tm - Technisches Messen, 79:451-458, 2012.
[5] J.-E. Ha. Automatic detection of chessboard and its applications. Optical Engineering, 46:067205, 2009.
[6] P. Lutzke, M. Schaffer, P. Kühmstedt, R. Kowarschik, and G. Notni. Experimental comparison of phase-shifting fringe projection and statistical pattern projection for active triangulation systems. In Optical Measurement Systems for Industrial Inspection VIII, volume 8788 of Proc. SPIE, page 878813, Apr 2013.
[7] A. Pak. The concept of smooth generic camera calibration for optical metrology. tm - Technisches Messen, 1:25-35, 2016.
[8] M. Schaffer, M. Große, B. Harendt, and R. Kowarschik. Statistical patterns: an approach for high-speed and high-accuracy shape measurements. Optical Engineering, 53(11):112205, 2014.
[9] C. Schmalz, F. Forster, and E. Angelopoulou. Camera calibration: active versus passive targets. Optical Engineering, 50:113601-113601-10, 2011.
[10] S. Werling, M. Mai, M. Heizmann, and J. Beyerer. Inspection of specular and partially specular surfaces. Metrology and Measurement Systems, 16, 2009.
[11] A. Wiegmann, H. Wagner, and R. Kowarschik. Human face measurement by projecting bandlimited random patterns. Opt. Express, 14(17):7692-7698, Aug 2006.

## Figures

Fig. 1 shows the principle of deflectometric measurement according to the prior art.
Fig. 2 shows a mapping implemented by a camera from world 3D points to sensor pixels.
Figs. 3 and 4 show devices according to the prior art.
Figs 5a and 5b show systems according to examples.
Fig. 6 shows an image of a checkerboard pattern reflected in a plano-convex lens (prior art).
Fig. 7a shows a pattern according to examples.
Fig. 7b shows a surface plot of an autocorrelation function according to examples.
Fig. 8 shows contour plots of an autocorrelation function according to examples.
Fig. 9a shows a camera image as acquired according to examples.
Fig. 9b shows a color map of a normalized correlation function according to examples.
Figs. 10a-10d show color-coded screen point coordinates decoded according to examples.
Fig. 1 1 shows a decoding technique according to examples.
Figs. 12-15 show auxiliary methods according to examples.
Fig. 16 shows a system according to an example.

## Summary

In accordance to examples, there is proposed an apparatus for deriving properties of an object on the basis of:

- a sequence of reference patterns displayed by a reference device, the sequence of reference patterns being displayed at subsequent time instants by the reference device so that light emitted by the reference device is incident on the object;
- a sequence of images, the images being obtained at time instants from the light emitted by the reference device according to the reference patterns and transported to a sensing device via optical paths which involve inner and/or outer reflections from the surface and/or propagation through the volume of the object, the apparatus being configured, for at least one image pixel position in each of the images of the sequence of images, to:
- perform a processing of images to obtain a similarity function between:
    - ◦ a plurality of reference codes, each reference code being associated to one reference pixel position in the reference patterns, each reference code carrying information on the evolution of the optical radiation intensity of the reference device position modulated by the value of the reference pattern pixel at the reference pixel position during the time instants; and
    - ◦ an acquired code associated to the image pixel position, the acquired code carrying information on the evolution, in the sequence of images, of the optical radiation intensity acquired for the image pixel position;

- find:

  - at least one peak in the similarity function, the peak being a local peak or a global peak between the values of the similarity function; and
  - for at least one found peak, a maximizing reference pixel position associated to the at least one peak; and

- for each found peak:

  - associate the maximizing reference pixel position to the image pixel position.

In examples, the apparatus may be configured to determine, for at least one image pixel position, a relationship between:

- the optical radiation intensity at the image pixel position; and
- the optical radiation intensity(ies) at the at least one maximizing reference pixel position(s),

the relationship being based on:

- at least one coefficient associated to:

  - the reference code(s) associated to the maximizing reference pixel position; and
  - the acquired code associated to the image pixel position; and/or

- at least one constant term based on the acquired code and the at least one coefficient.

In examples, the apparatus may be configured, for the at least one image pixel position, to:

use obtained parameters of n>1 found peaks in the similarity function with the highest peak similarity values achieved at maximizing reference pixel positions $q_1, ..., q_n$ to obtain a relationship

$$g(\vec{\pi}) = A + B_1 s(\vec{q}_1) + \cdots + B_n s(\vec{q}_n) + \delta g$$

between the reference codes $s(\vec{q}_1), ..., s(\vec{q}_n)$ and the acquired code $g(\vec{\pi})$ at at least one image pixel position $\vec{\pi}$

.

In examples, the apparatus may be configured, for the at least one image pixel position, to:
use differential properties of the similarity function with respect to peaks obtained at different peak positions in order to estimate the uncertainty in the determination of maximizing reference pixel position.

In examples, the apparatus may be configured configured to:
perform the image processing with a similarity function being a normalized correlation defined as $C(\vec{s},\vec{g}) = \hat{s} \cdot \hat{g}$, where $\hat{g} = \frac{\vec{g}-\langle g\rangle\vec{1}}{|\vec{g}-\langle g\rangle\vec{1}|}$, and $\langle g\rangle = \frac{1}{K}\sum_{j=1}^{K} g_k$ and similarly for $\hat{s}$.

In examples, the apparatus may be configured to:
generate at least one reference pattern as an image with reference values obtained by a stochastic method and/or stochastically generating the at least one reference pattern, and/or wherein at least one reference pattern is generated as an image with a spatial spectrum featuring a maximum frequency cut-off associated to a minimum spatial correlation length.

In examples, the apparatus may be configured to:
for at least one time instant, adaptively prepare at least one pattern to be displayed at a time instant on the basis of the codes acquired at preceding time instants.

In examples, the apparatus may be configured to:
adaptively choose, on the basis of the acquired codes, a minimum spatial correlation length parameter of the reference patterns so as to define a band-limited spatial spectrum for the subsequent patterns.

In examples, the apparatus may be configured to:
define the minimum spatial correlation length parameter of the reference patterns so that the computational effort spent on data processing does not exceed a selected or predetermined limit or threshold.

In examples, the apparatus may be configured to:
for at least one time instant, prepare a reference pattern or a sequence of reference patterns under at least one of the following conditions:

- the autocorrelation function of the reference codes falling off to zero towards away from zero displacement;
- the autocorrelation function of the reference codes having maximum peak at zero displacement;
- the autocorrelation function of the reference codes peak having a finite width at zero displacement.

In examples, the apparatus may be configured to obtain a minimum spatial correlation length parameter; and further configured to, after having found a peak in the similarity function and the associated maximizing reference pixel position, search for a local peak among the reference pattern pixel positions whose distance from the maximizing reference pixel position is greater than the minimum spatial correlation length parameter.
In examples, the apparatus may be configured to:
define reference patterns which are stochastically independent from each other for different time instants.
In examples, the apparatus may be configured to:
define, for different pixel positions in the same pattern out of a predetermined interval, reference codes which are uncorrelated with each other.
In examples, the apparatus may be configured to:
modify the relative position between the object and the sensing device and/or reference device on the basis of acquired codes associated to the plurality of image pixel positions, to minimize the number of pixel positions for which the peaks in the respective similarity functions overlap and/or to minimize occurrences in which the individual peak identification fails.
In examples, the apparatus may be configured to:
define and/or display at least one of the reference patterns using a random physical process involving at least one of the following effects: laser speckles, flame, fumes, clouds, surface waves, or turbulence.
In examples, the apparatus may be configured to collect values associated to:

- the at least one image pixel position and the associated maximizing reference pixel position(s) and/or
- reference code(s) and/or acquired code(s); and/or
- relationship(s) between the optical radiation intensity(ies) of the reference pixels(s) and the optical radiation intensities of the acquired pixel(s); and/or
- similarity value(s); and/or
- incremental values associated to any of the data or information or numerical values above,

so as to compare the collected values to threshold statistical values and/or to threshold expected values.
In examples there is provided a deflectometric method which may derive properties of an object for example on the basis of:

- a sequence of reference patterns displayed by a reference device, the sequence of reference patterns being displayed at subsequent time instants by the reference device so that light emitted by the reference device is incident on the object; and/or
- a sequence of images, the images being obtained at time instants from the light emitted by the reference device according to the reference patterns and transported to a sensing device via optical paths which involve inner and/or outer reflections from the surface and/or propagation through the volume of the object,

the method comprising, for at least one image pixel position in the sequence of images, to perform at least one of the following steps:

- performing a processing of images to obtain a similarity function between:

    ◦ a plurality of reference codes, each reference code being associated to one reference pixel position in the reference patterns, each reference code carrying information on the evolution of the optical radiation intensity of the reference device position modulated by the value of the reference pattern pixel at the reference pixel position during the time instants; and
    ◦ an acquired code associated to the image pixel position, the acquired code carrying information on the evolution, in the sequence of images, of the optical radiation intensity acquired for the image pixel position;

- finding:

◦ at least one peak in the similarity function; and
◦ for the at least one found peak, a maximizing reference pixel position; and

- for each found peak:

◦ associate the maximizing reference pixel position to an image pixel position.

According to examples, there is provided a non-transitory storage device storing instructions which, when executed by a processor, cause the processor to perform one of the methods above or below.

General discussion of examples

As discussed above, we assume that an optical system comprising, for example, a reference device (e.g., a screen or a "cave"), an object, and a camera, obtains and/or processes an image of screen pixels on the camera sensor. Before reaching the sensor, light emitted by the screen may reflect from the outer surfaces, propagate through the volume, and/or reflect from the inner surfaces of the studied object. Due to multiple viable optical paths, each sensor pixel $\vec{\pi}$ (with coordinates (*u*, *v*), for example) may receive light from one or several screen pixels denoted as $\vec{p}$ (with coordinates (*x,y*) or (*x,y,z*), for example) as shown in Fig. 5b.

Reference can be made to Fig. 5a, which shows a system 50' configured to derive the properties of a *specular* object (mirror) 53'. A camera 54 (or another imaging sensor) acquires images displayed by a reference device 56. For example, light emitted at the point (reference pixel position) $\vec{p}_1$ is transported along the path (ray) 57a and reflects from the external surface 53a' of the object 53' according to the reflection law. After that, it follows the path 57b and hits the sensor of the camera 54 at a pixel with coordinates $\vec{\pi}_1$. In Fig. 5a, the reference pixel position $\vec{p}_1$ in the reference pattern maps onto the image pixel position $\vec{\pi}_1$. For the sake of clarity, Fig. 5a shows the path of light originating from a single reference pixel $\vec{p}_1$. In general, different reference pixels would be mapped onto different image pixels.

Reference is now made to Fig. 5b, which shows a system 50 to derive properties of a *transparent* object 53. Light emitted at different reference pixel positions $\vec{p}_1$ $\vec{p}_2$, and $\vec{p}_3$ reaches the same image pixel position $\vec{\pi}_1$ in the camera 54 by virtue of multiple internal reflections (see paths 57", 57"' between the surfaces 53a and 53b) facilitated by the transparency of the material. Hence, the possibility of determining the geometry of the object 53 is rendered complicated. For example, with the prior art techniques, by simply examining the acquired optical radiation intensity of image pixel position $\vec{\pi}_1$, it would not be possible to distinguish between the components of the intensity originating at each of $\vec{p}_1$, $\vec{p}_2$, and $\vec{p}_3$.

With the present examples, the system 50 comprises a controller 52 (which may be an apparatus or part of an apparatus) which permits to derive the properties of the transparent object 53.

Here, the reference device 56 may display a sequence of reference patterns at different and subsequent time instants. For example, in Fig. 5b, light is emitted at the reference pixel positions $\vec{p}_1$, $\vec{p}_2$, and $\vec{p}_3$ according to e.g. the reference pattern 70 (Fig. 7a). For each reference pixel position $\vec{p}_1$ $\vec{p}_2$, and $\vec{p}_3$, a respective intensity value $s(\vec{p}_1)$, $s(\vec{p}_2)$, and $s(\vec{p}_3)$ may be defined by each reference pattern such as e.g. 70. For each reference pixel position $\vec{p}_1$, $\vec{p}_2$, and $\vec{p}_3$, the intensity value may be, for example, between a 0 value (e.g., no light) and a maximum value (e.g., maximum intensity). Each reference pattern defines different intensity values for all reference pixel positions. Each reference pattern may be represented as a matrix (e.g., stored in a memory), each entry of the matrix being associated to a particular reference pixel position (e.g., with two-dimensional coordinates *x,y*), with the value being the intensity value. The entries of the matrix may be communicated to the reference device 56, for example, by the controller 52 (e.g., via digital communication, such as a cable or wireless communication). An example of a reference pattern is the pattern 70 shown in Fig. 7a. Basically, the reference device 56 may be understood as modulating the intensity of pixels on the reference screen (e.g., on the basis of the values in the entries of the matrix under the control of the controller 52). Notably, in the examples here, reference is made to a "screen" (which may be, for example, a digital display). However, it is also possible to make use of "caves", projection screens, or other devices which are configured to modulate the intensity of light emitted by some (flat or curved) surface according to arbitrary patterns.

Synchronously to the display of the reference patterns by the reference device 56, a sequence of images may be acquired by the camera 54. In particular, the camera 54 may acquire the light emitted by the reference device 56 according to the reference patterns (such as e.g. 70) and transported to the camera 54 (or another sensing device) via an optical path (e.g., 57', 57", 57"' and 57b). The optical path may involve inner and/or outer reflections from the surfaces 53a and 53b of the object 53 (in other examples a propagation through the volume of the object may be provided). Each image acquired by the camera 54 may also be represented as a matrix in two dimensions (with coordinates u, v, for example), each entry corresponding to an intensity value. The entries of the matrix may be communicated to the controller 52, for example.

The controller 52 may control the activities of the system 50, e.g., of the reference device 56 and/or of the camera 54. For example, the controller 52 may generate reference patterns (such as e.g. 70) and/or may synchronously control their acquisition by the camera 54. (In examples, the sequence of reference patterns 70 may be stored in a memory and provided to the reference device 56 when needed. In examples, the controller 52 may obtain the sequence of reference patterns and/or the sequence of images acquired by the camera 54 and process them, at least partially, during an offline session.)

The camera 54 may be placed so as to be in static relationship with the object 53 when acquiring the images. The reference device 56 may be placed so as to be in static relationship with the object 53 during the emission of the light (display of the patterns). The controller 52 may be aware of the relative positions between the camera 54, the reference device 56, and/or the object 53. Therefore, the controller 52 may reconstruct the real shape of the object 52 or, at least, may derive some structural properties of the object 53.

In examples, systems which move the camera 54 and/or the object 53 and/or the reference device 56 may be provided, so as to perform different measurement sessions with different relative positions between the camera 54, the reference device 56, and/or the object 53.

In examples, calibration methods may be possible in which, after having obtained a first measurement with an initial geometrical relationship between the camera, the object and the reference device, a second, different geometrical relationship between these elements may be chosen to ameliorate the measurements.

A hardware setup may be used to maintain the elements of the system in a static relationship and to control the relative motion between them in case of necessity (e.g., calibration). Motors and actuators may be controlled by the controller 52 to move the camera 54, the reference device 56, and/or the object 53 into different positions.

The controller 52 is aware of the patterns that have been displayed by the reference device 56, and may determine the properties (e.g., geometrical properties, quality-related properties, etc.) of the object 53 by analyzing the sequence of acquired images obtained from the different reference patterns. By decoding codes modulated by the reference device 56 and acquired by the camera 54, the controller 52 may determine correspondences between the camera pixels ($\vec{\pi}$) and the emitting reference screen pixels ($\vec{p}$). Accordingly, it is possible to establish, on the basis of the positional relationships between the object 53, the camera 54 and the reference device 56, properties associated to the geometry of the object 53.

In examples, the controller 52 may process the sequence of images on the basis of a similarity function. The similarity function may be obtained from a plurality of reference codes ($\vec{s}(\vec{p})$). Each reference code $\vec{s}(\vec{p})$ may be associated to a particular reference pixel position $\vec{p}$ for the sequence of reference patterns. For example, if the sequence of images is formed by $K$ = 200 images, for each pixel position $\vec{p}$, the reference code will be a vector with $K$ values, whose $k^{th}$ value is associated to the intensity of that pixel for the $k^{th}$ reference pattern. Each reference code may carry information on the evolution of the optical radiation intensity and may be expressed as a vector ($s_1,s_2,...,s_k,...,s_K$), for example ($K$ may be a value such as 200, or more than 10, or between 150 and 250, for example). Therefore, the light emitted at each reference pixel position $\vec{p}$ varies its intensity to form a reference code described by the vector ($s_1,s_2,...,s_k,...,s_K$). The values of each reference code are known a priori. They may have been pre-computed or generated by the controller 52 during the session.

The similarity function also takes into consideration the acquired codes $\vec{g}(\vec{\pi})$ associated to the image pixels $\vec{\pi}$. For each pixel $\vec{\pi}$ of each image 1, ..., $k$, ...,$K$ acquired by the camera 54, the acquired intensity will be an entry $g_k(\vec{\pi})$ of the code $\vec{g}(\vec{\pi})$. The acquired code $\vec{g}(\vec{\pi})$ carries information on the evolution in the sequence of images acquired by the camera 54, of the optical radiation intensity ($\vec{g}_1,\vec{g}_2,...,g_k,...\vec{g}_K$) acquired for the image pixel position $\vec{\pi}$.

The similarity function may be, for example, a correlation function such as a normalized correlation function, a covariance-based function, etc. The similarity function may give information on a statistical relationship between the light intensities as emitted by the reference device 56 and the light intensities as acquired by the camera 54.

It has been noted that, for each camera pixel $\vec{\pi}$, a peak in the similarity function (e.g., in the absolute value, in some examples) may be understood as indicating the pixel which, among all pixels of the reference device 56, contributes the most light to the illumination of the camera pixel $\vec{\pi}$. With reference to the acquired pixel position $\vec{\pi}_1$ in Fig. 5b, for example, the peak in the similarity function may be associated with the pixel position $\vec{p}_1$ in the reference device 56: as can be noted, the path 57' taken by the light is more direct than the paths 57" and 57"', and the contribution of the pixel $\vec{p}_1$ to the acquired intensity at $\vec{\pi}_1$ is expected to be greater than the contribution of $\vec{p}_2$ and $\vec{p}_2$. The contribution provided by $\vec{p}_2$ and $\vec{p}_3$ to the light intensity at $\vec{\pi}_1$ is likely to be lower than the contribution of $\vec{p}_1$, i.e., by virtue of the light losses due to multiple reflections between the surfaces 53 and 53b.

With the present examples, by finding the reference pixel position which maximizes the similarity function (e.g., absolute maximum), a position relating to the dominant contributing pixel $\vec{p}_1$ may be obtained. The dominant pixel $\vec{p}_1$ may be associated, for example, to the acquired pixel position $\vec{\pi}_1$.

However, it has been understood that also the positions associated to at least another, secondary dominant pixel $\vec{p}_2$ can be retrieved, e.g., by finding a locally maximizing reference pixel position (e.g., a secondary local peak) in the similarity function.

An example is discussed with reference to Figs. 9a and 9b. Fig. 9a shows an image 90 as acquired by the camera 54 (this could be one of the $K$ = 200 images acquired from 200 image acquisitions in synchronisation with the display of the sequence of 200 reference patterns). (The coordinates in Fig. 9a correspond to the camera pixel positions $\vec{\pi}$.) Each acquired pixel position (mapped in the coordinates $u$, $v$) may be associated to an intensity value stored in a matrix after the acquisition. Let us consider the camera pixel position $\vec{\pi}_1$ referred to as 91. Fig. 9b shows a plot 92 of a correlation function corresponding to the pixel position $\vec{\pi}_1$ (the higher the similarity, the less intense the color for each pixel position) depending on the reference pixel positions $\vec{p}$ (mapped in the coordinates $x$,$y$). As can be seen, an absolute maximum 93 and a local maximum 94 have been identified by searching based on the similarity function, and by finding out the two locally maximizing positions. The absolute maximum 93 in the correlation function of Fig. 9b corresponds to the directly reflected signal (the respective screen pixel position). The second, local maximum 94 in the correlation function of Fig. 9b corresponds to a different contributing optical path, and the respective maximizing screen position cannot be obtained with the techniques according to the prior art. Techniques of relative peak finding are per se known.

As can be understood by comparing Fig. 9b with Fig. 5b, a geometrical relationship between the first (absolute) maximum 93 and the second (local) maximum 94 is related to the different optical paths taken by the light. Therefore, it is possible to obtain relationships between the reference pattern pixels in the reference device 56 and the camera image pixels acquired by the camera 54. With reference to Fig. 5b, it is now possible to understand:

- the pixel position 91 of Fig. 9a as the pixel position $\vec{\pi}_1$ in the acquired image;
- the pixel position 93 of Fig. 9b as the maximizing position $\vec{p}_1$ in the reference pattern; and
- the pixel position 94 of Fig. 9b as the locally maximizing pixel position $\vec{p}_2$ in the reference pattern.

It may also be determined that the preferable association for the camera pixel position 91 is the reference screen pixel position 93. The pixel position 94 (and its displacement from the position 93) may also provide information about the object (e.g., on the thickness, on the material, etc.).

Fig. 8 shows a peak 93' and a local peak 94' in a normalized correlation function 80. In particular, Fig. 8 shows a similarity function profile for a single camera pixel in a synthetic experiment: direct decoding of screen pixels when the observed signal is generated via a linear mixing model of Eq. 2. The plot 92 of Fig. 9b has the same meaning of that of Fig. 8, but the data are obtained in a real experiment with a glass lens. The multi-valued correspondences are clearly obtainable as described above both in the simulation and in the real experiment.

In examples, the reference patterns 70 can be stochastic images (e.g., the pixel values of the patterns are generated by a stochastic process). In examples, there is no correlation between a pattern with the preceding or subsequent patterns or any other pattern of the sequence. The patterns may be defined as stochastic random patterns. It has been noted, in fact, that accordingly the of the measurements is further increased.

According to examples, each pattern 70 is spatially band limited. For example, the pattern may be a stochastic random image, where each pixel value is sampled independently, and filtered (e.g., using a Gaussian filter) in order to implement an upper frequency cut-off limit and/or a lower frequency cut-off limit. With reference to Fig. 7a, it is possible to recognize in the pattern some connected regions (e.g., prevalently white regions 70a and/or prevalently black regions 70b which appear, to human eye, to be separated from each other by gracefully grey-scaled graded intermediate regions). This may be the effect of a filtering applied to the random patterns. Each pattern 70 is therefore generated so as to have no relationship at all with any of the previous and/or the following patterns in the sequence.

It has been noted that by having a band-limited stochastic pattern for each reference pattern of the sequence, the computational effort needed for the decoding of screen positions will be decreased.

Fig. 7b shows an autocorrelation function 72 computed for the pattern 70. The x-y axes denote the relative displacement between the image copies so that the central point in the x-y domain corresponds to zero displacement. The z axis is the autocorrelation value. In correspondence to a peak 73 at zero displacement, the function 72 falls off to zero as the displacement grows. The band limitation of the pattern is mirrored by the "width" 74 of the peak 73: the lower the upper filtering cut-off frequency, the "wider" the peak 73, and vice versa.

In examples, a technique based on the sequences of band-limited stochastic coding patterns is proposed. A series of $K$ (e.g., 200) random patterns such as that of Fig. 7a are displayed by the coding screen (e.g., reference device 56), so that a screen pixel at a point $\vec{p}$ (reference pixel position) displays a random but pre-computed sequence of values $s_j(\vec{p})$, $j$ = 1,..., $K$, which we denote as a code or vector $\vec{s}(\vec{p})$. In order to decode this sequence in the camera pixels, the following similarity metric may be employed. Consider two sequences $\vec{s}$ and $\vec{g}$ of length $K$. The *normalized correlation* (which may be an example of a similarity function) between them may be computed as:

$$C(\vec{s},\vec{g}) = \hat{s}\cdot\hat{g},\ \text{where}\ \hat{g} = \frac{\vec{g}-\langle g\rangle\vec{1}}{|\vec{g}-\langle g\rangle\vec{1}|},\ \langle g\rangle = \frac{1}{K}\sum_{j=1}^{K} g_k, \tag{4}$$

$$\hat{s} = \frac{\vec{s}-\langle s\rangle\vec{1}}{|\vec{s}-\langle s\rangle\vec{1}|},\ \langle s\rangle = \frac{1}{K}\sum_{j=1}^{K} s_k$$

The above normalized correlation may be interpreted as a cosine of the angle between two vectors in the *K*-dimensional space after their mean values have been subtracted. An important property of stochastic patterns is that the sequences $\vec{s}(\vec{p}_1)$ and $\vec{s}(\vec{p}_2)$ are uncorrelated in the limit of large number of patterns for sufficiently well-separated points $\vec{p}_1$ and $\vec{p}_2$, i.e.

$$C(\vec{s}(\vec{p}_1),\vec{s}(\vec{p}_2)) \to 0\ \text{as}\ K\to\infty\ \text{and}\ |\vec{p}_1-\vec{p}_2| > \Delta, \tag{5}$$

where $\Delta$ may be the characteristic width (e.g., full width at half maximum, FWHM, also referred to as "parameter $\Delta$") of the peak in the auto-correlation function of the pattern (cf. Fig. 7b).

**Decoding of single-valued correspondences.** Given a sequence $\vec{g}$ observed at a camera pixel $\vec{\pi}$, the decoding of a single-valued point correspondence $\vec{\pi}\to\vec{p}$ (i.e., finding the respective point $\vec{p}$ on the coding screen) may be done as follows:

$$\vec{p} = argmax_{\vec{p}'}\ C(\vec{s}(\vec{p}'),\vec{g}(\vec{\pi})). \tag{6}$$

(It is noted, inter alia, that the formulation Eq. 6 is not suggested by the prior art. A similar technique has been used for fringe-projection measurements [11, 8]. These methods also rely on maximizing the normalized correlation. However, in that case one can rely on the epipolar geometry, so that the maximum is sought along a straight line in the $\vec{p}$ space:

$$\vec{p} = \vec{a} + \alpha\,\vec{b},\ \text{where}\ \alpha = argmax_{\alpha'}\ C(\vec{s}(\vec{a}+\alpha'\vec{b}),\vec{g}), \tag{7}$$

where $\vec{\alpha}$ and $\vec{b}$ may be determined during a separate calibration session. This procedure may be significantly simpler than the complete 2D maximization of Eq. 6 in the suggested method. However, this is part of the prior art and does not need to be treated here.)

**Decoding of multi-valued correspondences.** Multiple correspondences (if needed) may be found using an extension of Eq. 6, for example. If the controller 52 needs to decode a correspondence $\vec{\pi}\to[\vec{p}_1, ...,\vec{p}_n]$ (with $n > 1$), it needs to identify $n$ highest peaks of the function $f(\vec{p}) = C(\vec{s}(\vec{p}),\vec{g}(\vec{\pi}))$. The positions of the peaks then permit to obtain the decoded points $\vec{p}_1, ...,\vec{p}_n$, while the values of the correlation at peaks and its derivatives near maxima can be further used to establish the mixing coefficients $B_1, ..., B_n$ and, if needed, the decoding uncertainties $\delta\vec{p}_i$ (Fig. 8).

This method has been demonstrated to work properly at least in the presence of a two-fold overlapping signal (Figs. 9a and 9b) which is beyond the capabilities of the prior art.

Figs. 10a-10d show the results obtained from an experiment using a circular plano-spherical lens. One of the acquired camera images is shown in Fig. 9a. The Figs. 10a-10d show the decoding results (multi-valued point correspondences) computed for all camera pixels (as opposed to studying a single pixel as in Fig. 9b). The four panels show the decoded screen x- and y-coordinates for the two dominant contributions for the light arriving at each camera pixel. In terms of Eq. 2 with $n = 2$, the Figs. 10a, 10b, 10c, and 10d represent the color-coded values of $(\vec{p}_1)_y$, $(\vec{p}_1)_x$, $(\vec{p}_2)_y$, and $(\vec{p}_2)_x$, respectively, as functions of the sensor pixel position $\vec{\pi}$. The decoding was done according to the technique described above by finding the local maxima of the normalized correlation function. More intense colors indicate higher coordinate values.

Apart from some artifacts (in the central region) related to peak ordering and the insufficient separation of peaks, the decoded point coordinates are relatively smooth and noise-free. The spurious decoding results outside of the lens may be easily filtered out by e.g. setting a threshold applied to the minimum contrast of the sequence.

It is remarked that $\vec{p}_1 = argmax_{\vec{p}'}\ C(s(\vec{p}'),\vec{g}(\vec{\pi}))$, in Figs. 10c and 10d, refers to $\vec{p}_2$ (the secondary local peak). The artefacts 101 (black regions) relate to regions for which the similarity function cannot resolve the two peaks. Such situations are in general due to a non-optimal object position, for which the two contributing screen pixels $\vec{p}_1$ and $\vec{p}_2$ are too close to each other.

In examples, the patterns such as in Fig. 7a have some pre-defined highest (and possibly lowest) frequency (hence "band-limited"). Equivalently, the autocorrelation function (a delta-function for band-unlimited random patterns) may have a shape similar to that in Fig. 7b: it may fall off to zero far away from zero displacement (assuming an infinitely large image size); and the peak at zero displacement must have some finite width $\Delta$ (which is direrctly related to the out off frequency). Finally, different patterns are un-correlated with each other.

The generation of stochastic patterns can be done in many different ways. For example, a low-pass filter on the random images and then performed a non-linear, valumetric ("compander") transform to improve the pattern histograms (i.e. applied some non-linear function to each pixel value) may be used.

In examples, the parameter $\Delta$ may play an important role. If the image of the screen is blurred with a kernel size smaller than $\Delta$, the decoding will still succeed. On the other hand, if the two overlapping signals are shifted by a distance less than $\Delta$ (i.e., $|\vec{p}_1 - \vec{p}_2| < \Delta$ in Eq. 2), the multi-valued decoding may fail. Finally, smaller $\Delta$ will generally make the peak identification more challenging since the respective correlation profile will be less "smooth". This is easy to understand by looking at e.g. Fig. 9b, where the width of both peaks is directly related to the parameter $\Delta$ of the coding patterns used.

Fig. 11 shows an apparatus 110 (which is here depicted as a group of blocks, but may implement or be implemented by the controller 52) for deriving properties of an object (e.g., 53). The apparatus 110 may perform the operations 120 (Fig. 12) on the basis of:

- a sequence 170 of reference patterns (e.g., 70, all the patterns 70 being different from and uncorrelated with each other) displayed by a reference device (e.g., 56), the sequence 170 of reference patterns being displayed at subsequent time instants [1, 2, ..., K] by the reference device 56 so that light emitted by the reference device 56 is incident on the object 53;
- a sequence 190 of images (e.g., 90), the images having been obtained at time instants [1, 2, ..., K] from light emitted by the reference device (e.g., 56) according to the reference patterns and transported to a sensing device (e.g., camera 54) via optical paths (e.g., 57'-57"') which involve inner and/or outer reflections from the surface (53a, 53b) and/or propagation through the volume of the object (53).

The sequences 170 and 190 may be obtained, for example, at step 120a of method 120. Notably, at a step 120a, a particular image pixel $\vec{\pi}_1$ is chosen and the method may be repeated several times, by iterations 124, so as to choose other image pixel positions $\vec{\pi}_2$, $\vec{\pi}_3$ ... In some examples, all the image pixel positions $\vec{\pi}_i$ may be iteratively chosen. In other examples, only a selection of the pixel positions of the acquired images are chosen.

The apparatus is configured, for at least one image pixel position in each of the images (90) of the sequence (190) of images (90), to:

- perform (step 121) a processing of images to obtain a similarity function (121) between:
  - ◦ a plurality of reference codes, each reference code being associated to one reference pixel position in the reference patterns, each reference code carrying information on the evolution of the optical radiation intensity of the reference device position (p) modulated by the value of the reference pattern pixel at the reference pixel position during the time instants; and
  - ◦ an acquired code associated to the image pixel position, the acquired code carrying information on the evolution, in the sequence of images, of the optical radiation intensity acquired for the image pixel position;
- find (step 122):
  - ◦ at least one peak in the similarity function, the peak being a local peak or a global peak between the values of the similarity function; and
  - ◦ for the found at least one peak, a maximizing reference pixel position (93, 94) associated to the at least one peak; and
- for each found peak (step 123):
  - ◦ associate the maximizing reference pixel position to the image pixel position.

In examples, while the correlating unit 111 may operate on the fly, the peak retrieval unit 111 and/or the association unit 113 may operate offline, for example.

The similarity function (e.g., correlation) may be a function of $\vec{p}$ and $\vec{\pi}$. Peaks may be found with respect to screen position $\vec{p}$ for a fixed sensor pixel $\vec{\pi}$.

When a number of dominant peaks (e.g., $n$ peaks) have been retrieved, it possible, for example, to achieve reference pixel positions $\vec{q}_1$, $\vec{q}_2$,...,$\vec{q}_n$ to obtain the relationship

$$g(\vec{\pi}) = A + B_1 s(\vec{q}_1) + \cdots + B_n s(\vec{q}_n) + \delta g$$

between the reference codes $s(\vec{q}_1)$, ..., $s(\vec{q}_n)$ and the acquired code $g(\vec{\pi})$ at one particular pixel position $\vec{\pi}$. Therefore, the coefficients $A$, $B_1$,..., $B_n$ may be obtained.

The coefficients may be determined via the analysis of the un-normalized correlation $Z(\vec{s}(\vec{p}),\vec{g}(\vec{\pi}))$:

$$Z(\vec{s},\vec{g}) = \langle(\vec{s} - \langle s\rangle\vec{1}) \cdot (\vec{g} - \langle g\rangle\vec{1})\rangle,$$

$$B_1 = 12 \cdot Z\big(\vec{s}(\vec{q}_1), \vec{g}(\vec{\pi})\big), \ldots, B_n = 12 \cdot Z\big(\vec{s}(\vec{q}_n), \vec{g}(\vec{\pi})\big),$$

and

$$A = \langle\vec{g}(\vec{\pi}) - 0.5\, B_1 - \cdots - 0.5\, B_n\rangle,$$

where we assume that the values in $\vec{s}(\vec{p})$ are uniformly distributed between 0 and 1 for each $\vec{p}$.

Therefore, the apparatus 110 may be configured to determine, for at least one image pixel position $\vec{\pi}$, a relationship (e.g., $g(\vec{\pi}) = A + B_1 s(\vec{q}_1) + ... + B_n s(\vec{q}_n) + \delta g$) between:

- the intensity ($g(\vec{\pi})$) at the image pixel position ($\vec{\pi}$); and
- the intensity(ies) ($s(\vec{q}_1)$) at the at least one maximizing reference pixel position(s) ($s(\vec{q}_1)$,93, 94).

The determined relationship (e.g., $g(\vec{\pi}) = A + B_1 s(\vec{q}_1) + \cdots + B_n s(\vec{q}_n) + \delta g$) may be based on:

- at least one coefficient (e.g., $B_1$,$B_2$) associated to:
    - the reference code(s) $\vec{s}(\vec{q}_1)$) associated to the at least one peak ($\vec{q}_1$...); and
    - the acquired code ($\vec{g}(\vec{\pi})$) associated to the image pixel position ($\vec{\pi}$); and/or
- at least one constant term ($A$) based on the acquired code.

Further, we may assume that the noise power $P^2 = \langle\delta g^2\rangle$ is known a priori (e.g., it may be measured during a separate calibration session). If the positions $\vec{q}_1$, ..., $\vec{q}_n$ are the found local maxima of $f(\vec{p}) = C(\vec{s}(\vec{p}),\vec{g}(\vec{\pi}))$, then the covariance matrix of the uncertainty in e.g. $\vec{q}_1$ may be found as follows:

$$\Sigma_1 = D \cdot P^2 \cdot \left(\frac{\partial^2}{\partial p_i \partial p_j} Z(\vec{s}(\vec{p}), \vec{g}(\vec{\pi}))|_{\vec{p}=\vec{q}_1}\right)^{-1},$$

where $\frac{\partial^2}{\partial p_i \partial p_j} Z(\vec{s}(\vec{p}), \vec{g}(\vec{\pi}))|_{\vec{p}=\vec{q}_1}$ is the matrix of the second partial derivatives of $Z(\vec{s}(\vec{p}),\vec{g}(\vec{\pi}))$ evaluated at the respective peak position, and $D\sim1$ is a numeric coefficient that depends on the details of the noise distribution functions. Uncertainties in the remaining peaks may be found in the same fashion.

Fig. 13 shows a method 130, which may permit to create K (e.g., $K = 200$) reference patterns 70. The method may start at 131. At 131, the variable $k$ is initialized as $k = 1$.

Then, K pattern cycles 133 are repeated, by stochastically generating each $k^{th}$ pattern at 134. In order to generate the pattern, a random physical process may be used, which may involve at least one of the following effects: laser speckles, flame, fumes, clouds, surface waves, and/or turbulence.

At 135, each $k^{th}$ pattern is filtered (e.g., low-pass filtered or band-pass filtered), for making the $k^{th}$ patters band-limited. At 136 it is checked *(k ≥ K?)* if it is necessary to create another pattern and, in case it is not necessary (YES), the method 130 may end, so that all the patterns are stored in a memory to be used by the reference device, for example. If it is necessary to create another pattern (e.g., the $(k+1)^{th}$ pattern), the variable *k* is updated (k++) at 137 and the cycle 133 is reiterated.

The filter at 135 may be based, for example, on a cutoff frequency (e.g., a maximum frequency) which may affect the shape of each pattern. With reference to Fig. 7a, the lower the cutoff frequency, the narrower the white regions 70a and the black regions 70b. Further, the cutoff frequency is bound to the parameter $\Delta$, which may be understood as the minimum spatial correlation length parameter $\Delta$. The greater the $\Delta$, the lower the cutoff frequency. The greater $\Delta$, the larger the width of the peak 74 in Fig. 7b. The parameter $\Delta$ may be extremely important for determining the absolute peak ($\vec{p}_1$) and the second peak ($\vec{p}_2$): if the distance between the absolute peak ($\vec{p}_1$) and the second peak ($\vec{p}_2$) is less than $\Delta$, the absolute peak ($\vec{p}_1$) and the second peak ($\vec{p}_2$) are not obtained with the similarity function. With reference to Figs. 10c and 10d, the artefacts 101 are created because of the distance between the absolute peak ($\vec{p}_1$) and the second peak ($\vec{p}_2$) being less than $\Delta$. The filter may be, for example, a low-pass Gaussian filter.

Hence, in examples, there may be a relationship between the cutoff frequency (and the appearance of the reference pattern 70) and the minimum closeness (parameter $\Delta$) between the absolute peak ($\vec{p}_1$) and the second peak ($\vec{p}_2$) that are to be retrieved. Otherwise, both the peaks $\vec{p}_1$ and $\vec{p}_2$ cannot be retrieved.

One could argue that, in order to cope with such a limitation, an increased cutoff frequency could simply reduce the minimum closeness between the absolute peak ($\vec{p}_1$) and the second peak ($\vec{p}_2$) that to be retrieved. However it is also necessary to keep in mind that it may be preferable to reduce the effort of calculation necessary for obtaining the peaks. In that case, the higher the cutoff frequency, the higher the computational effort. It is possible, for example, to define a maximum computational effort (which may be bound, for example, to the time necessary for performing the method) and, on the basis of the maximum computational effort, to define the parameter $\Delta$. Once the parameter $\Delta$ is defined, the minimum distance that can be determined between the absolute peak ($\vec{p}_1$) and the second peak ($\vec{p}_2$) is fixed ($|\vec{p}_1 - \vec{p}_2| > \Delta$).

In examples, it is simply possible to select the cutoff frequency (or the parameter $\Delta$) manually. However, in other cases, it is also possible to rely on automatic strategies.

For example, it is possible to adaptively choose, on the basis of the acquired codes [$\vec{g}(\vec{\pi})$] and/or of the acquired correlation maxima, a minimum spatial correlation length [the parameter $\Delta$] of the reference patterns so as to define a band-limited spatial spectrum for the subsequent patterns. This may be obtained, for example, with a calibration process.

An example is provided by Fig. 14, which shows a method 140. At step 141 a first, generic cutoff frequency may be chosen. At 142 a pattern or a sequence of patterns may be stochastically generated. At 143 the generated pattern(s) may be low-pass filtered according to the cutoff frequency. At 144 light is emitted by the reference device 56 according to the filtered pattern(s). Synchronously, at 145 an image(s) is(are) acquired by the camera 54. Then method 120 may be performed (e.g., by processing the correlation function) and, at 146, the resulting correlation function is analysed. If too many or too big artefacts 101 are recognized (e.g., as in Figs. 10c and 10d), at 147 the cutoff frequency is increased, so as to reduce the minimum distance between the maximum peak and the second maximum peak. Otherwise, if the obtained correlation function is satisfactory and the artefacts 101 are not too prominent, step 147 may be bypassed at 148 and a new pattern 142 may be generated. The first iterations of this process may be simply performed for the purpose of retrieving the most preferable cutoff frequency and its results may be discarded when performing the measurements (calibration). Between steps 120 and 146, step 145b a check (not shown) may be provided, so as to end the method when an image of satisfactory quality is obtained (at 145c); otherwise, the method is repeated.

Fig. 15 shows another method 140' which may also imply a calibration, where, instead of modifying the cutoff frequency, at 147' the relative position between the object 53, the camera 54 and/or the reference device 56 is modified (e.g., by operating actuators). When the level of artefacts is acceptable, the modification of the position may be bypassed at 148' and the measurements may start. Between steps 120 and 146', at step 145b' a check (not shown) may be provided, so as to end the method when an image of satisfactory quality is obtained (at 145c'); otherwise, the method is iterated.

In examples, at least one of the following assertions is valid:

- each reference pattern is uncorrelated to any of the preceding and subsequent reference patterns;
- each reference pattern may be a stochastic pattern;
- each reference pattern may be a filtered pattern (e.g., with a cutoff frequency of $1/\Delta$) ;

- the parameter Δ may refer to the minimum distance between the peaks that can be determined ($|\vec{p}_1 - \vec{p}_2| > \Delta$);
- the parameter Δ may be the characteristic width (e.g., full width at half maximum, FWHM) of the peak in the auto-correlation function of the pattern (Fig. 7b);
- the auto-correlation function of the pattern (Fig. 7b) falls off to zero towards away from zero displacement;
- the auto-correlation function of the pattern (Fig. 7b) has maximum peak at zero displacement;
- the auto-correlation function of the pattern (Fig. 7b) has a peak 73 having a finite width [Δ] at zero displacement;
- an increased Δ is associated to a reduced cutoff frequency;
- an increased Δ is associated to a reduced computational effort;
- an increased Δ requires an increased time to perform the technique;
- a reduced Δ (increased cutoff frequency) permits to achieve a more accurate determination of the peaks, at the expenses of the computation speed;
- during a calibration operation, the parameter Δ and/or the positional relationships between the camera, the reference device and the object may be modified to:

    ◦ find out the appropriate parameter Δ and/or positional relationship which permits to retrieve the maximum peak and the second maximum peak in an acceptable maximum time.

Discussion on technical effects

At least some of the examples have effects (in addition to those inherent to all active screen techniques) which may be summarized as follows:

- The method allows multi-valued decoding of overlapping coding signals. The mixed signals can be produced by the same source as in 5b or by different sources (when, e.g., multiple coding screens are used).
- The tolerance to blurring and the minimal separation between the mixed signals are directly controlled by the parameter Δ that may be chosen a priori to match the application. In practice, one can select the highest cut-off frequency such that the decoding still works fast enough, and then place and tilt the object so that the decoded signal remains stable inside the region of interest (cf. Figs. 10a-10d).
- The principle of maximizing the normalized correlation is very general and applies to various pattern types. In particular, the procedure of Eq. 6 is able to decode non-overlapping signals encoded with CPSPSs, with the same quality of the output data. Based on the findings of [6], we expect that the coding accuracy of the cosine patterns will match that of stochastic band-limited patterns given the same number of camera frames.
- By extending the decoding procedure outlined above, one can in the same decoding run (1) separate the encoded and non-encoded camera pixels, (2) detect the presence of overlapping signals, (3) estimate the multiplicity of mixing, (4) decode the screen points and their uncertainties, and (5) determine the mixing coefficients.

Other characterizations

Other characterizations may be as follows:

- Reliable decoding requires a large number of coding patterns (i.e., camera images). The peak-to-background ratio in the correlation profile (important for the peak finding algorithms) degrades as $1/\sqrt{K}$.
- The decoding may be understood as a CPU-intensive technique. For each camera pixel, it is needed to solve the global 2D optimization problem of Eq. 6. The total runtime may be reduced by implementing the method with some parallel architecture (e.g., with GPUs).
- Naively generated band-limited patterns tend to have value histograms concentrated in the middle of the available interval.

Further modifications

The described coding method is very flexible and allows a large freedom in the implementation:

- If the patterns are generated by some different procedure so that $\langle \vec{s}(\vec{p}) \rangle = a$ and $|\vec{s}(\vec{p}) - a\vec{1}| = b$ for all points $\vec{p}$ and some constants *a* and *b*, the decoding may be trivially modified to use the un-normalized correlation $Z(\vec{s},\vec{g})$ defined above as the similarity metric.
- The pattern correlation length Δ may be chosen adaptively, based on some feedback loop in the decoding process (see for example Fig. 14, keeping in mind that Δ is associated to the inverse of the cutoff frequency). This can be considered a possible extension of the proposed method.

- Since the method can utilize arbitrary random patterns, it is possible to employ some random physical effect such as laser speckles, clouds, or turbulence to generate the patterns on the fly directly on some surface. In this case, some readout scheme is necessary in order to record the patterns for the decoding stage.
- The parameter Δ may be defined implicitly when a differently-parameterized pattern generation scheme is used.
- The straightforward peak search in the 2D correlation profile may be accelerated using various computational techniques. One option is to use pre-computed transforms (such as discrete Fourier or wavelet transforms) of the coding patterns.
- Another practical option would be to generate patterns that are randomly modulated along a single direction (similarly to the CPSPSs).

Other modifications may comprise:

- Using more than one pattern source (e.g. distributing one pattern over a multiple monitor setup or a complex-shaped coding surface);
- Increasing the scale of the setup (e.g., observing an ocean surface from a satellite and detecting the reflection of random cloud patterns);
- Reducing the scale of the setup (e.g., micro-droplets or biological films under a microscope);
- Using a different spectral range such as IR, UV, or X-rays.

Some elements of the examples

Elements of examples of the proposed solution may comprise at least one of:

- Using correlation (normalized or un-normalized) as the similarity metric between the observed and the displayed pixel value sequences in the context of mixed signal observation;
- Local maximization of the similarity metric is used to identify the contributing pattern points, i.e. one or more points from multiple overlapping signals;
- The method as described above relies on the property of random fixed-power sequences to have zero correlation in the infinitely high-dimensional limit, while the residual correlation decays as the inverse square root of the dimensionality K;
- There exist deterministic (non-random) coding sequences whose correlations decay faster than $\sqrt{K}$ (e.g., cosine-modulated patterns). Finding a novel deterministic pattern sequence for 2D position coding would be an essential invention per se; however, the decoding then must be sufficiently different from the 2D correlation maximization described here;
- Reliance on the maximum pattern frequency as the specification of the signal separability;
- The maximum pattern frequency controls the robustness of the coding method against blurring (de-focusing) effects.

While the prior-art method of CPSPSs can mathematically be considered a specific case of the correlation-maximizing coding of non-overlapping signals (Eq. 6), it is not necessary for the present technique.

Examples of applications

An application is the inspection and measurement of transparent objects with several reflecting surfaces. This can be realized in a deflectometric setup with a flat screen or using a projector of patterns, which illuminates a 3D scene.

Presently, the powerful method of deflectometry is mostly applied to inspecting specular surfaces. Transparent objects can be measured only in a situation where the overlapping back-side reflections are suppressed or can be ignored. The data processing algorithm central to the Invention allows one to separate, identify, and exploit these secondary reflections. With that, it becomes possible to inspect the geometry of such transparent objects as car windshields, precision lenses, smartphone cover glass plates, etc.

Let us first consider the application to the production of lenses, where the fast and accurate deflectometric measurement may replace interferometry as the primary method of the on-line quality control:

1) A high-accuracy deflectometric setup typically costs much less than an equivalent interferometer and requires no high-precision reference surface.

2) No immersion or other potentially destructive back-reflex suppression methods are needed.

3) Both surfaces of the lens may be characterized simultaneously in a single measurement without further manipulations.

4) Lenses of any shapes and sizes can be measured without a costly re-adjustment of the measurement setup, including aspheric and free-form shapes. (Interferometers must typically be re-adjusted).

5) Raw deflectometric data (normal vector distributions) allow simple defect identification and classification (unlike phase profiles delivered by interferometers).

Another demanding application, the production of car windshields, may also benefit from the Invention. The perceived aesthetics of cars depend strongly on the sub-micron variations of the windshield geometry. Yet, at the moment the geometry of the windshields can be controlled only in a small number of points, located mostly on the boundary.

1) Due to complex and diverse shapes of windshields, their complete interferometric control would be prohibitively expensive.

2) A deflectometric measurement delivers dense geometric data that can be directly used to quantify the aesthetic quality of car windows.

3) It is known that it is the shape curvature of the windshields that impacts the human perception the most. Deflectometric data can be directly used to produce high quality curvature maps.

4) The flexibility of deflectometry is important for the production and the inspection of multiple products at the same facility.

5) Due to the nature of the Invention, it is possible to build an inspection setup capable of assessing both surfaces of the glass after the installation in a car, performed entirely from the outside of the car.

Fig. 16 shows a system 160 which may comprise (or be a particular example) of the system 50 of Fig. 5b or the apparatus 110 of Fig 16 The system 160 may comprise at least one of the camera (or other imaging sensor) 52, the reference device 56, and the controller 52. The system 160 may implement at least one of the methods shown in Figs. 11-15, for example.

As shown in Fig. 16, the system 160 may comprise a testing block 162 for testing the quality of a plurality of objects 161. At each time, at least one single object 161 (or a plurality of similar objects) may be subjected to a testing operation. The testing operation may comprise, for example, an acquisition of a sequence of images (e.g., images 90) by the camera 52, after having being subjected to a sequence of reference patterns 70 displayed by the reference device 54. In case, calibration operations (e.g., as shown in Figs. 14 and 15) may be performed. For each tested object, it is possible to obtain correspondences between at least one image pixel position (e.g., $\vec{\pi}$) and at least one (or two) maximizing reference pixel positions (e.g., 93, 94). For example, a plurality of image pixel positions $\vec{\pi}_1$, $\vec{\pi}_2$, $\vec{\pi}_M$ (where M is a predefined number of pixels) may be processed, so as to obtain, for each of the image pixel positions $\vec{\pi}_1$, $\vec{\pi}_2$,..., $\vec{\pi}_M$, correspondences (e.g., two peaks associated to maximizing reference pixel positions $q_1$, q2).

At least for one object 161 (but preferably on a plurality of series-manufactured similar products), at least one value may be collected (e.g., stored in a memory). The collected at least one value (metrics) may be, for example, associated to at least one of the following data:

- image pixel positions (e.g., $\vec{\pi}_1$, $\vec{\pi}_2$,..., $\vec{\pi}_M$) and, for each the associated maximizing reference pixel position(s) $\vec{q}_1$, $\vec{q}_2$... and/or similarity value(s) (such as correlation values and/or un-correlation values associated to the image pixel positions $\vec{\pi}_1$, $\vec{\pi}_2$,..., $\vec{\pi}_M$); and/or
- reference code(s) (e.g., $\vec{s}(\vec{p})$) and/or acquired code(s) (e.g., $\vec{g}(\vec{\pi})$); and/or
- relationship(s) (e.g., the values of the coefficients $A$, $B_1$, $B_2$, ... of equation (2)) between the intensity(ies) ($s(\vec{q}_i)$) of the reference pixels(s) and the intensities ($g(\vec{\pi})$) of the acquired pixel(s); and/or
- incremental values associated to any of the data or information or numerical values above.

Accordingly, it is possible to compare the collected values to threshold statistical values (data) 163 and/or to threshold expected values (data) 164, so as to derive quality information 165.

A comparison with statistical data 163 is here described. For each object, at least one of the collected values may, for example, be compared with statistically-obtained values 163 associated to analogous values of the previously tested objects. If, for one object, the at least one of the collected value deviates from the statistically-obtained value for more than a threshold, the test result has negative result and the object may be discarded (or, in any case, a quality information 165 is determined by associating the object with negative result). Let us assume that the object imaged by image 90 in Fig. 9a is subjected to a test regarding the reference image pixel position 91. As explained above, a local maximizing reference image pixel position 93 and a local maximizing reference image pixel position 94 are obtained thorough one of the techniques above. Accordingly, the testing block 162 may compare the pixel positions 93 and 94 (or their distance) with the average of the pixel positions of the previously tested objects (corresponding to the same image pixel position $\vec{\pi}_1$). If the at least one of the pixel positions 93 and 94 deviate from the relative average for a distance greater than a determined threshold, then the test is assumed as having a negative result. If each of the pixel positions 93 and 94 is within a determined threshold distance from the relative average, then the test is assumed to have a positive result.

A comparison with expected data 164 is here described. For each object, at least one of the collected values may, for example, be compared with expected values 164 (e.g., values which are determined during a design phase). If, for one object, the at least one of the collected value deviates from the expected value for a difference greater than a determined threshold, the test result has negative result and the object may be discarded (or, in any case, a quality information 165 is determined by associating the object with negative result). Let us assume that the object imaged by image 90 in Fig. 9a is subjected to a test regarding the reference image pixel position 91. As explained above, a local maximizing reference image pixel position 93 and a local maximizing reference image pixel position 94 are obtained thorough one of the techniques above. Accordingly, the testing block 162 may compare the pixel positions 93 and 94 (or their distance) with the expected pixel positions (corresponding to the same image pixel position $\vec{\pi}_1$). If the the at least one of the pixel positions 93 and 94 deviate from the expected position for a distance greater than a determined threshold, then the test is assumed as having a negative result. If each of the pixel positions 93 and 94 is within a determined threshold distance from the relative average, then the test is assumed to have a positive result.

Even if the maximizing pixel position 93 and 94 have been described in the examples, it is also possible to take into considerations incremental values. For example, in Fig. 9b, it may be examined if, in a neighbourhood of a dimension greater than a determined threshold, incremental (e.g., differential) values are above determined thresholds (which may be statistically-obtained or predefined, for example). This could mean, for example, that the object has some imperfections, so as to provide a quality information with negative result.

It is also possible to test objects by using a plurality of criteria. E.g., each criterion may be associated to a comparison of a particular value of the objected with a related (expected or statistically-obtained value) threshold. Each criterion may provide a score associated to the deviance of the value with an expected or statistically-obtained value. A final rating may be obtained by summing or averaging the scores of the object. The final rating may be compared to a final threshold which provides the final information on the positive or negative result.

In addition or in alternative, the at least one values and/or metrics and/or data associated to the image pixel positions, reference codes, relationships, incremental values, etc., may be displayed on a display. In other cases, they may be used to notify an alarm, e.g., when the metrics are out of an expected interval or deviate too much from the statistical values.

Some characterizations of figures

Figure 1: a system according to the prior art, which illustrates, inter alia, the principle of deflectometry. Using a calibrated coding screen 16, one uniquely identifies the original 3D point of each camera 14 view ray. The reflection condition then constrains the surface normal vectors 17, or the incline at each surface point. The global object 13 shape is then integrated from the normal vector field.

Figure 2: Camera mapping from the 3D space onto the 2D image (sensor) space.

Figure 3: A camera image of a calibration checkerboard 30 according to the prior art.

Figure 4: An LCD screen 40 displaying a cosine-modulated coding pattern according to the prior art.

Figure 5a: a system (here applied to a specular object).

Figure 5b: a system (here applied to a transparent object).

Figure 6 (prior art): A checkerboard pattern reflecting in a plano-convex lens. The back-side and the front-side reflections clearly overlap, preventing the identification of the cell corners.

Figures 7a and 7b: A sample stochastic band-limited pattern (7a) and the respective autocorrelation function (7b). In Fig. 7b, zero shift vector (argument of the auto-correlation function) corresponds to the center of the plotted domain.

Figure 8: Normalized correlation profile for a synthetic mixed noisy signal with a two-fold overlapping as a function of the screen position $\vec{p}$ with $K = 100$ stochastic patterns (left).

The apexes of the two highest peaks are located near the ground truth coding points (93', 94'). In the right panel, the region near one of the peaks is shown with magnification. The mixing introduces only a minor bias in the position of the maximum.

Figures 9a and 9b: One experimental camera image (Fig. 9a) and the normalized correlation profile for a lens dataset after decoding with K=200 patterns (Fig. 9b). The crosses 93 and 94 denote the camera pixel whose sequence is decoded (Fig. 9a) and the identified peak positions (fig. 9b).

Figures 10a-10d: Decoded point coordinates for a lens dataset; two-fold overlapping signal is assumed. Outside of the lens, noise signal is generated (can be easily suppressed in a realistic implementation). In dark pixels, the decoding failed: the front-side and the back-side signals are too close to each other (less than $\Delta$ on the coding screen), the correlation peaks overlap, and the individual peak positions cannot be identified reliably.

Further examples

Generally, examples may be implemented as a computer program product with program instructions, the program instructions being operative for performing one of the methods when the computer program product runs on a computer. The program instructions may for example be stored on a machine readable medium.

Other examples comprise the computer program for performing one of the methods described herein, stored on a machine readable carrier.

In other words, an example of method is, therefore, a computer program having a program instructions for performing one of the methods described herein, when the computer program runs on a computer.

A further example of the methods is, therefore, a data carrier medium (or a digital storage medium, or a computer-readable medium) comprising, recorded thereon, the computer program for performing one of the methods described herein. The data carrier medium, the digital storage medium or the recorded medium are tangible and/or non-transitionary, rather than signals which are intangible and transitory.

A further example of the method is, therefore, a data stream or a sequence of signals representing the computer program for performing one of the methods described herein. The data stream or the sequence of signals may for example be transferred via a data communication connection, for example via the Internet.

A further example comprises a processing means, for example a computer, or a programmable logic device performing one of the methods described herein.

A further example comprises a computer having installed thereon the computer program for performing one of the methods described herein.

A further example comprises an apparatus or a system transferring (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some examples, a programmable logic device (for example, a field programmable gate array) may be used to perform some or all of the functionalities of the methods described herein. In some examples, a field programmable gate array may cooperate with a microprocessor in order to perform one of the methods described herein. Generally, the methods may be performed by any appropriate hardware apparatus.

The above described examples are merely illustrative for the principles discussed above. It is understood that modifications and variations of the arrangements and the details described herein will be apparent. It is the intent, therefore, to be limited by the scope of the impending claims and not by the specific details presented by way of description and explanation of the examples herein.

Equal or equivalent elements or elements with equal or equivalent functionality are denoted in the following description by equal or equivalent reference numerals even if occurring in different figures.

## Claims

**1.** An apparatus (50, 52, 110, 160) for deriving properties of an object (53) on the basis of:

- a sequence (170) of reference patterns (70) displayed by a reference device (56), the sequence of reference patterns (70) being displayed at subsequent time instants by the reference device (56) so that light emitted by the reference device (56) is incident on the object (53);
- a sequence (190) of images (90), the images (90) being obtained at time instants from the light emitted by the reference device (56) according to the reference patterns (70) and transported to a sensing device (54) via optical paths (57a, 57b, 57', 57", 58"') which involve inner and/or outer reflections from the surface (53a, 53b) and/or propagation through the volume of the object (53),

the apparatus being configured, for at least one image pixel position in each of the images (90) of the sequence (190) of images (90), to:

- perform a processing of images to obtain a similarity function (121) between:

◦ a plurality of reference codes, each reference code being associated to one reference pixel position in the reference patterns, each reference code carrying information on the evolution of the optical radiation intensity of the reference device position (p) modulated by the value of the reference pattern pixel at the reference pixel position during the time instants; and
◦ an acquired code associated to the image pixel position, the acquired code carrying information on the evolution, in the sequence of images, of the optical radiation intensity acquired for the image pixel position;

- find (122):

◦ at least one peak in the similarity function, the peak being a local peak or a global peak between the values of the similarity function; and
◦ for at least one found peak, a maximizing reference pixel position (93, 94) associated to the at least one peak; and

- for each found peak (123):

◦ associate the maximizing reference pixel position to the image pixel position.

**2.** The apparatus of claim 1, further configured to determine, for at least one image pixel position, a relationship between:

- the optical radiation intensity at the image pixel position (91); and
- the optical radiation intensity(ies) at the at least one maximizing reference pixel position(s) (93, 94),

the relationship being based on:

- at least one coefficient associated to:

◦ the reference code(s) associated to the maximizing reference pixel position (93, 94); and
◦ the acquired code associated to the image pixel position; and/or

- at least one constant term based on the acquired code and the at least one coefficient,

and/or
the apparatus being configured, for the at least one image pixel position, to:

use obtained parameters of n>1 found peaks in the similarity function with the highest peak similarity values achieved at maximizing reference pixel positions $q_1, ..., q_n$ to obtain a relationship

$$g(\vec{\pi}) = A + B_1 s(\vec{q}_1) + \cdots + B_n s(\vec{q}_n) + \delta g$$

between the reference codes $s(\vec{q}_1), ..., s(\vec{q}_n)$ and the acquired code $g(\vec{\pi})$ at at least one image pixel position $\vec{\pi}$.

**3.** The apparatus of claim 1 or claim 2, configured, for the at least one image pixel position, to:

use differential properties of the similarity function with respect to peaks obtained at different peak positions in order to estimate the uncertainty in the determination of maximizing reference pixel position.

**4.** The apparatus of any of the preceding claims, configured to:

perform the image processing with a similarity function being a normalized correlation defined as

$C(\vec{s},\vec{g}) = \hat{s} \cdot \hat{g}$, where $\hat{g} = \frac{\vec{g}-\langle g\rangle\vec{1}}{|\vec{g}-\langle g\rangle\vec{1}|}$, and $\langle g\rangle = \frac{1}{K}\sum_{j=1}^{K} g_k$ and similarly for s.

**5.** The apparatus of any of the preceding claims, configured to:

generate at least one reference pattern (70) as an image with reference values obtained by a stochastic method and/or stochastically generating the at least one reference pattern (70), and/or
wherein at least one reference pattern (70) is generated as an image with a spatial spectrum featuring a maximum frequency cut-off associated to a minimum spatial correlation length.

**6.** The apparatus of any of the preceding claims, configured to:

for at least one time instant, adaptively prepare at least one pattern (70) to be displayed at a time instant on the basis of the codes acquired at preceding time instants.

**7.** The apparatus of any of claims 4-6, configured to:

adaptively choose, on the basis of the acquired codes, a minimum spatial correlation length parameter of the reference patterns so as to define a band-limited spatial spectrum for the subsequent patterns.

**8.** The apparatus of any of claims 6-9, configured to:

define the minimum spatial correlation length parameter of the reference patterns so that the computational effort spent on data processing does not exceed a selected or predetermined limit or threshold.

**9.** The apparatus of any of claims 5-8, configured to:

for at least one time instant, prepare a reference pattern (70) or a sequence of reference patterns under at least one of the following conditions:

- the autocorrelation function of the reference codes falling off to zero towards away from zero displacement;
- the autocorrelation function of the reference codes having maximum peak at zero displacement;
- the autocorrelation function of the reference codes peak having a finite width at zero displacement.

**10.** The apparatus of any of the preceding claims, configured to obtain a minimum spatial correlation length parameter; and
further configured to, after having found a peak in the similarity function and the associated maximizing reference pixel position, search for a local peak among the reference pattern pixel positions whose distance from the maximizing reference pixel position is greater than the minimum spatial correlation length parameter.

**11.** The apparatus of any of the preceding claims, configured to:

define reference patterns which are stochastically independent from each other for different time instants.

**12.** The apparatus of any of the preceding claims, configured to:

define, for different pixel positions in the same pattern out of a predetermined interval, reference codes which are uncorrelated with each other.

**13.** The apparatus of any of the preceding claims, configured to:

modify the relative position between the object and the sensing device and/or reference device on the basis of acquired codes associated to the plurality of image pixel positions, to minimize the number of pixel positions for which the peaks in the respective similarity functions overlap and/or to minimize occurrences in which the individual peak identification fails.

**14.** The apparatus of any of the preceding claims, configured to:

define and/or display at least one of the reference patterns using a random physical process involving at least one of the following effects: laser speckles, flame, fumes, clouds, surface waves, or turbulence.

**15.** The apparatus of any of the preceding claims, further configured to collect values and/or metrics associated to:

- the at least one image pixel position and the associated maximizing reference pixel position(s) and/or
- reference code(s) and/or acquired code(s); and/or
- relationship(s) between the optical radiation intensity(ies) of the reference pixels(s) and the optical radiation intensities of the acquired pixel(s); and/or
- similarity value(s); and/or
- incremental values associated to any of the data or information or numerical values above,

so as to compare the collected values to threshold statistical values and/or to threshold expected values.

**16.** A deflectometric method for deriving properties of an object (53) on the basis of:

- a sequence (170) of reference patterns (70) displayed by a reference device (56), the sequence of reference patterns (70) being displayed at subsequent time instants by the reference device (56) so that light emitted by the reference device (56) is incident on the object (53);
- a sequence of images (90), the images (90) being obtained at time instants from the light emitted by the reference device (56) according to the reference patterns (70) and transported to a sensing device (54) via optical paths (57a, 57b, 57’, 57", 58"’) which involve inner and/or outer reflections from the surface (53a, 53b) and/or propagation through the volume of the object (53),

the method comprising, for at least one image pixel position in the sequence (190) of images (90), to:

- performing a processing of images to obtain a similarity function (121) between:

  ◦ a plurality of reference codes, each reference code being associated to one reference pixel position in the reference patterns, each reference code carrying information on the evolution of the optical radiation intensity of the reference device position (p) modulated by the value of the reference pattern pixel at the reference pixel position during the time instants; and
  ◦ an acquired code associated to the image pixel position, the acquired code carrying information on the evolution, in the sequence of images, of the optical radiation intensity acquired for the image pixel position;

- finding (122):

  ◦ at least one peak in the similarity function; and
  ◦ for the at least one found peak, a maximizing reference pixel position; and

- for each found peak (123):

  ◦ associate the maximizing reference pixel position to an image pixel position.

**17.** A non-transitory storage device storing instructions which, when executed by a processor, cause the processor to perform the method of claim 16.

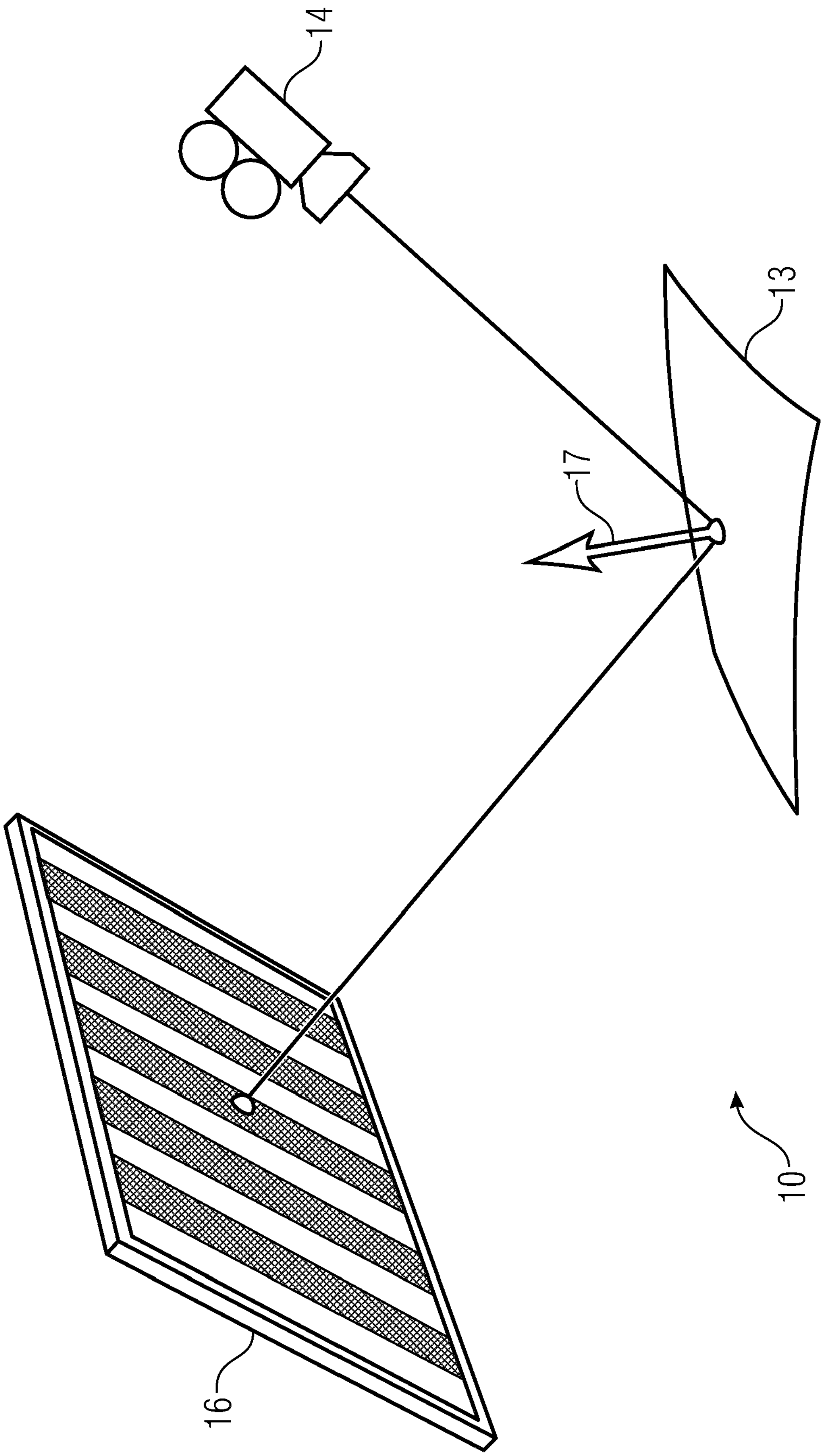


Fig. 1
(PRIOR ART)

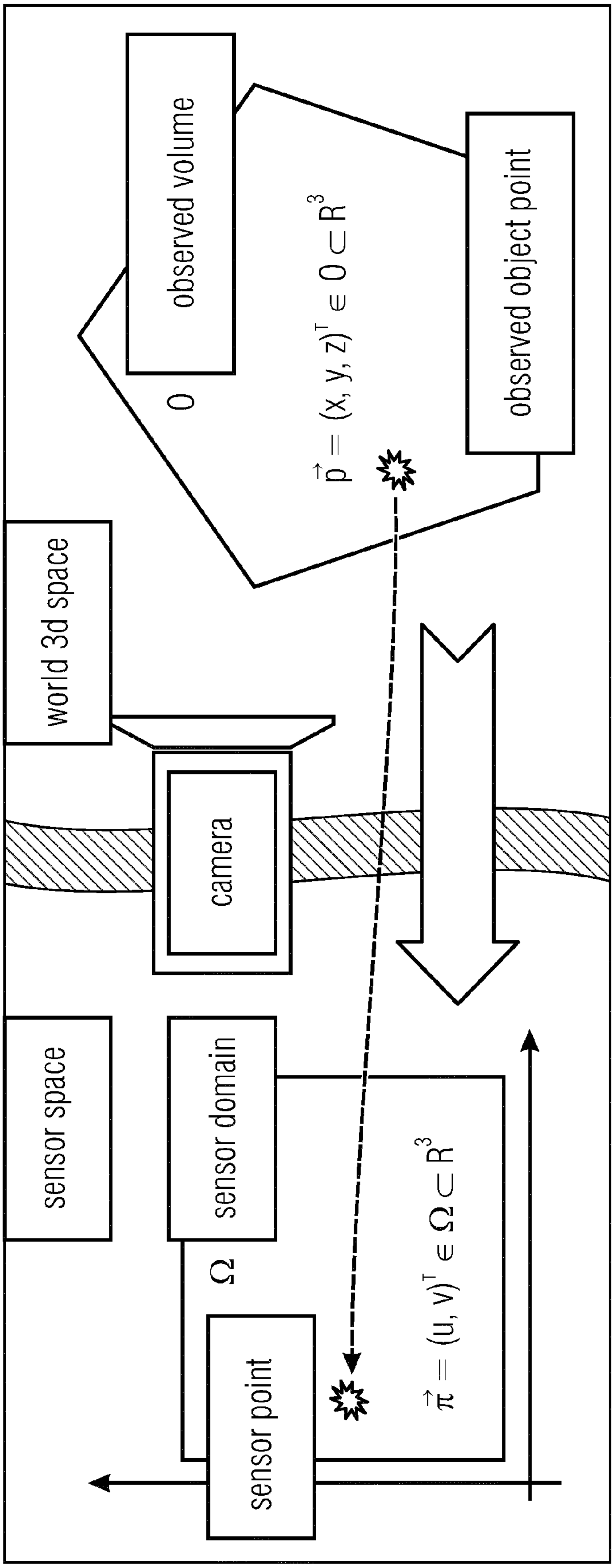
sensor space
world 3d space
sensor domain
camera
observed volume
sensor point
Ω
O
$\vec{\pi} = (u, v)^T \in \Omega \subset R^3$
$\vec{p} = (x, y, z)^T \in O \subset R^3$
observed object point

Fig. 2

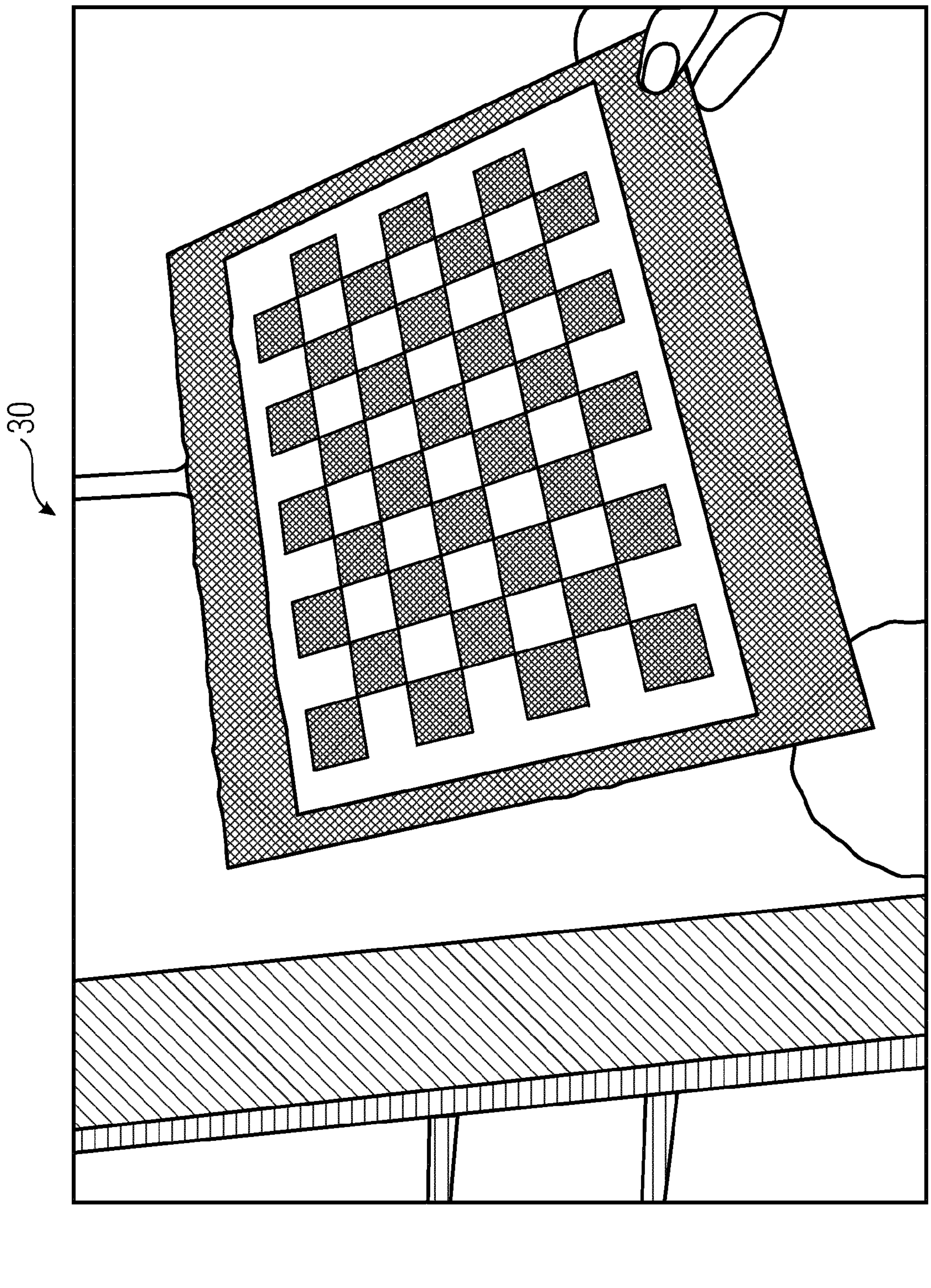


Fig. 3
(PRIOR ART)

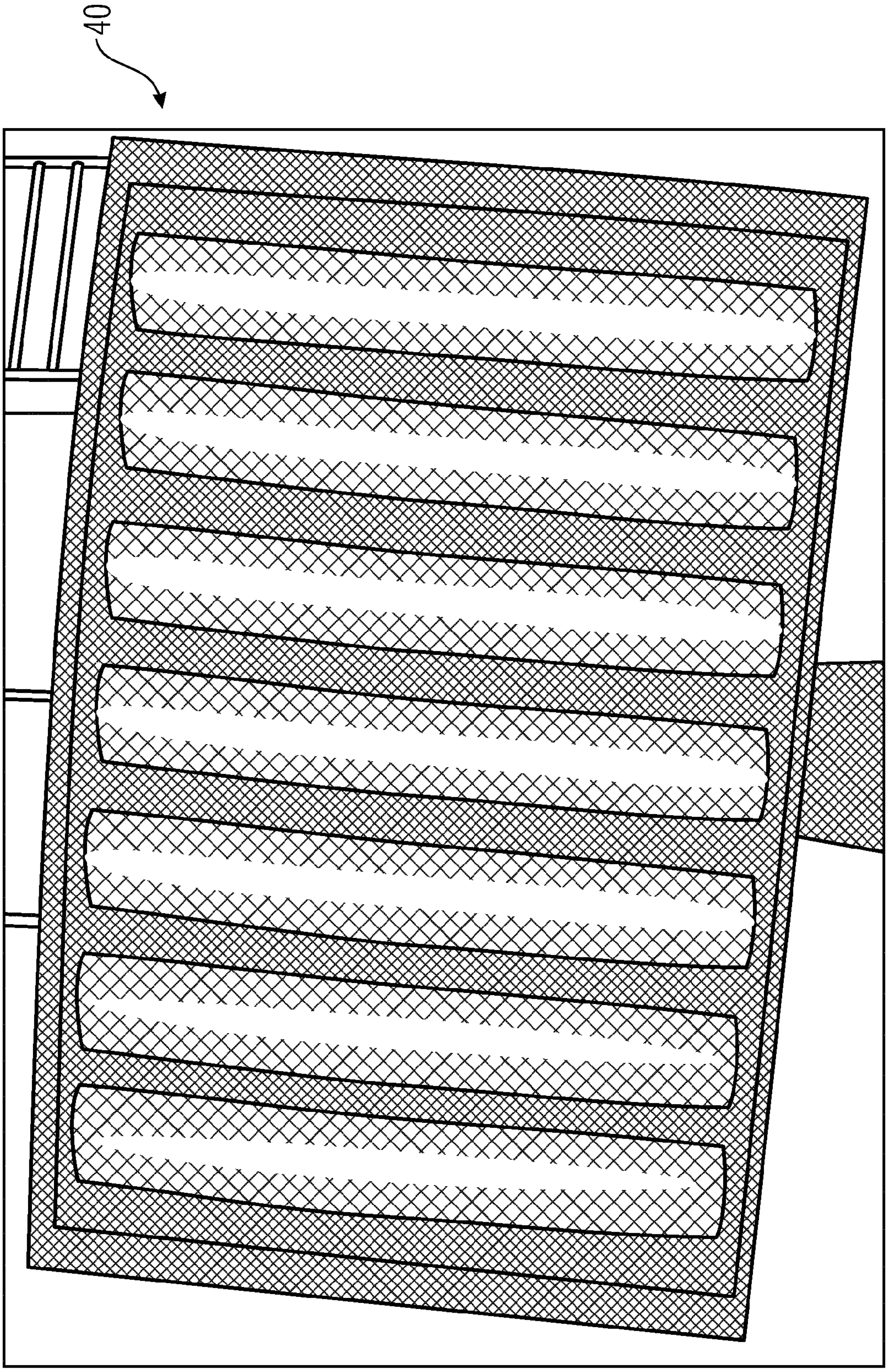


Fig. 4
(PRIOR ART)

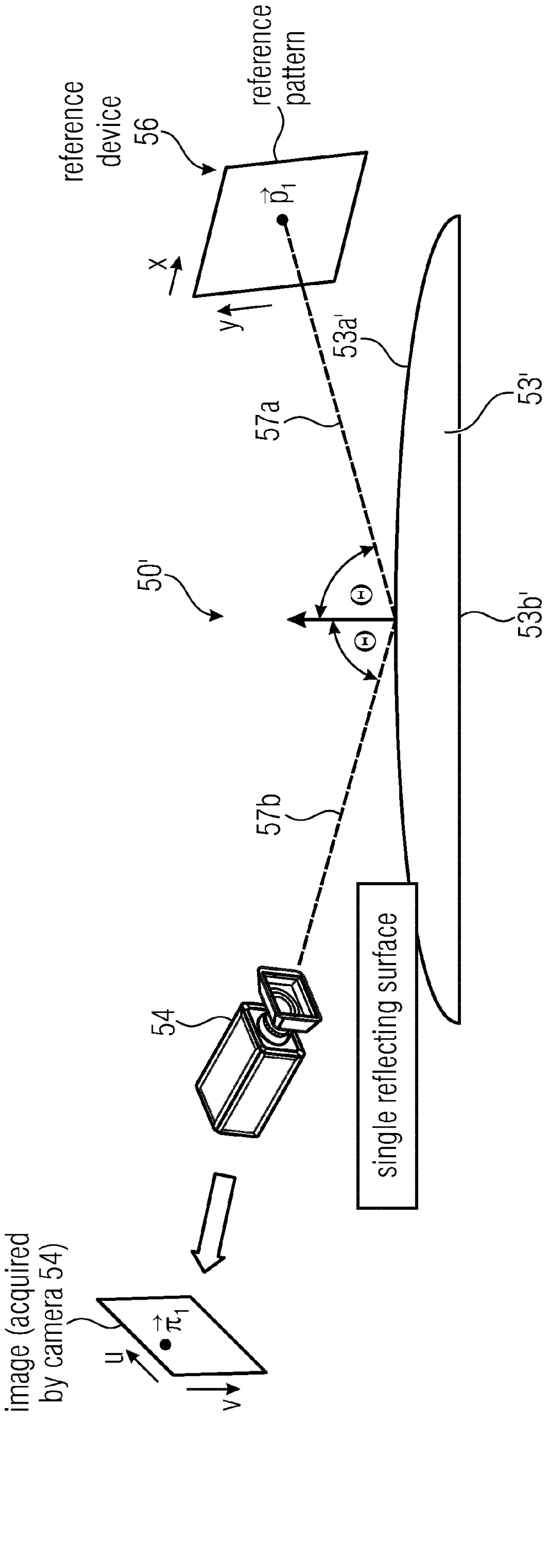

reference device
56
reference pattern
x
y
53a'
57a
53'
50'
Θ
Θ
53b'
57b
single reflecting surface
54
image (acquired by camera 54)
u
v


Fig. 5a

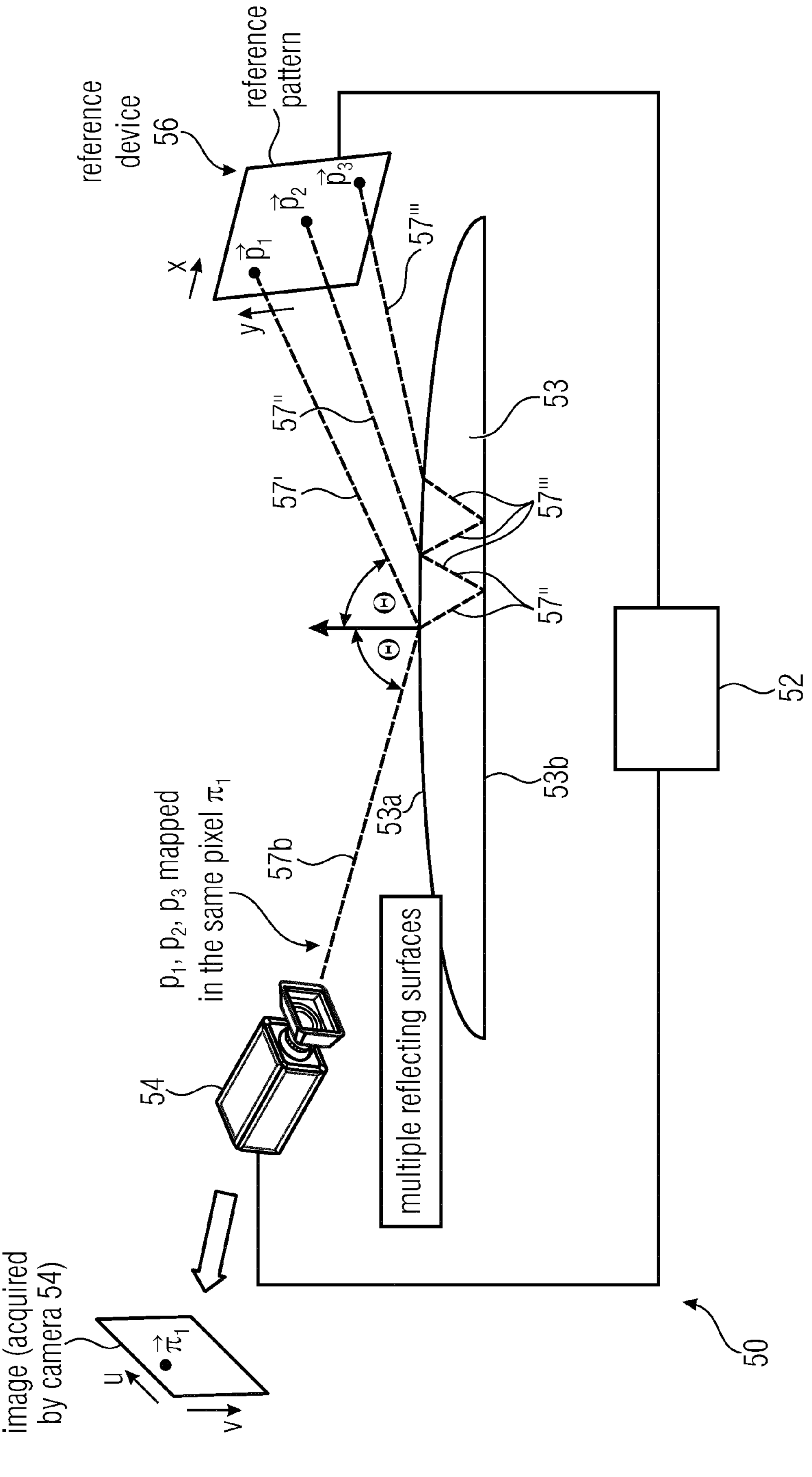
reference device 56
reference pattern
x
y
$\vec{p}_1$
$\vec{p}_2$
$\vec{p}_3$
57'''
57''
57'
53
57'''
57''
Θ
Θ
52
53b
53a
57b
$p_1$, $p_2$, $p_3$ mapped in the same pixel $\pi_1$
54
multiple reflecting surfaces
image (acquired by camera 54)
u
v
$\vec{\pi}_1$
50

Fig. 5b

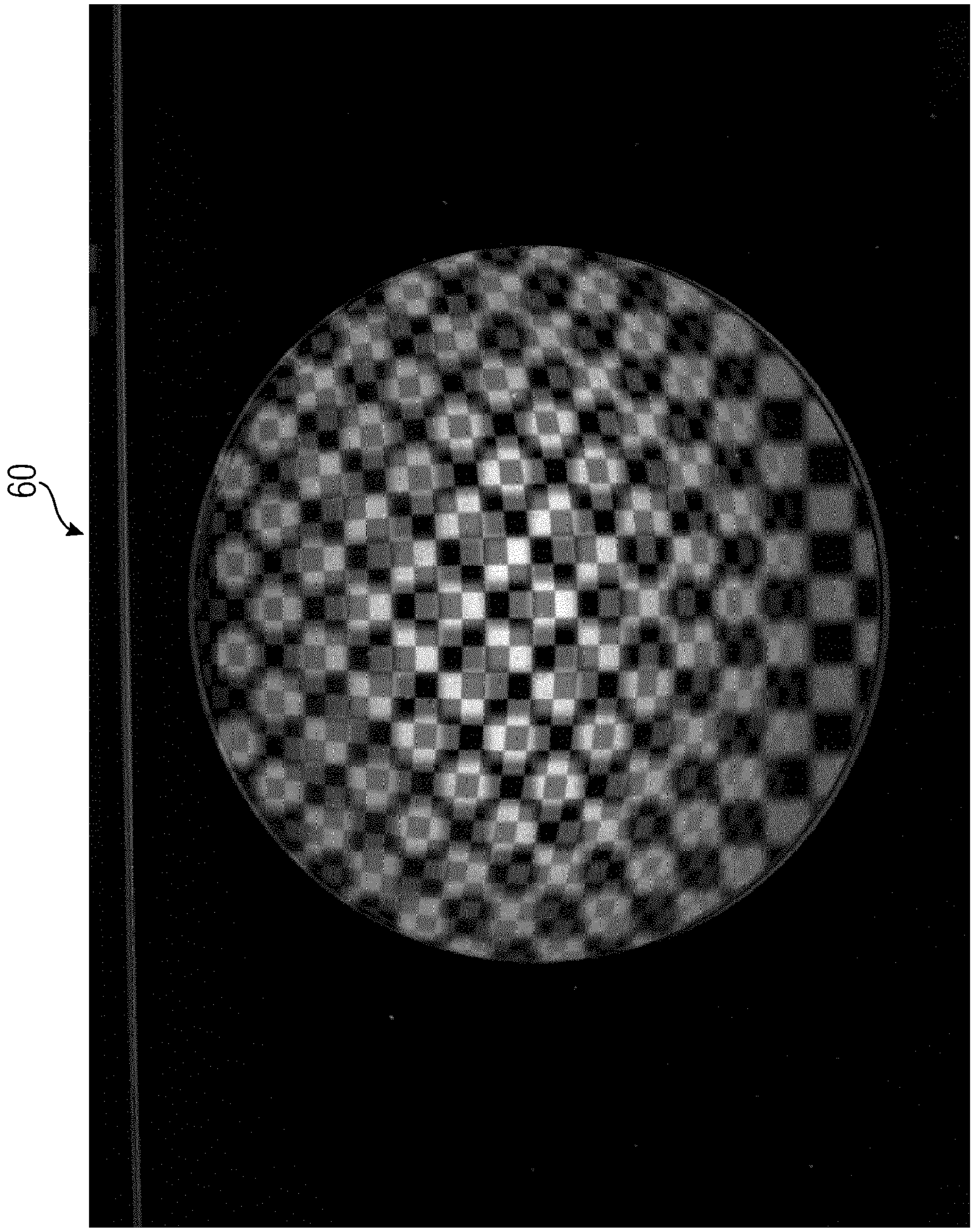


Fig. 6
(PRIOR ART)

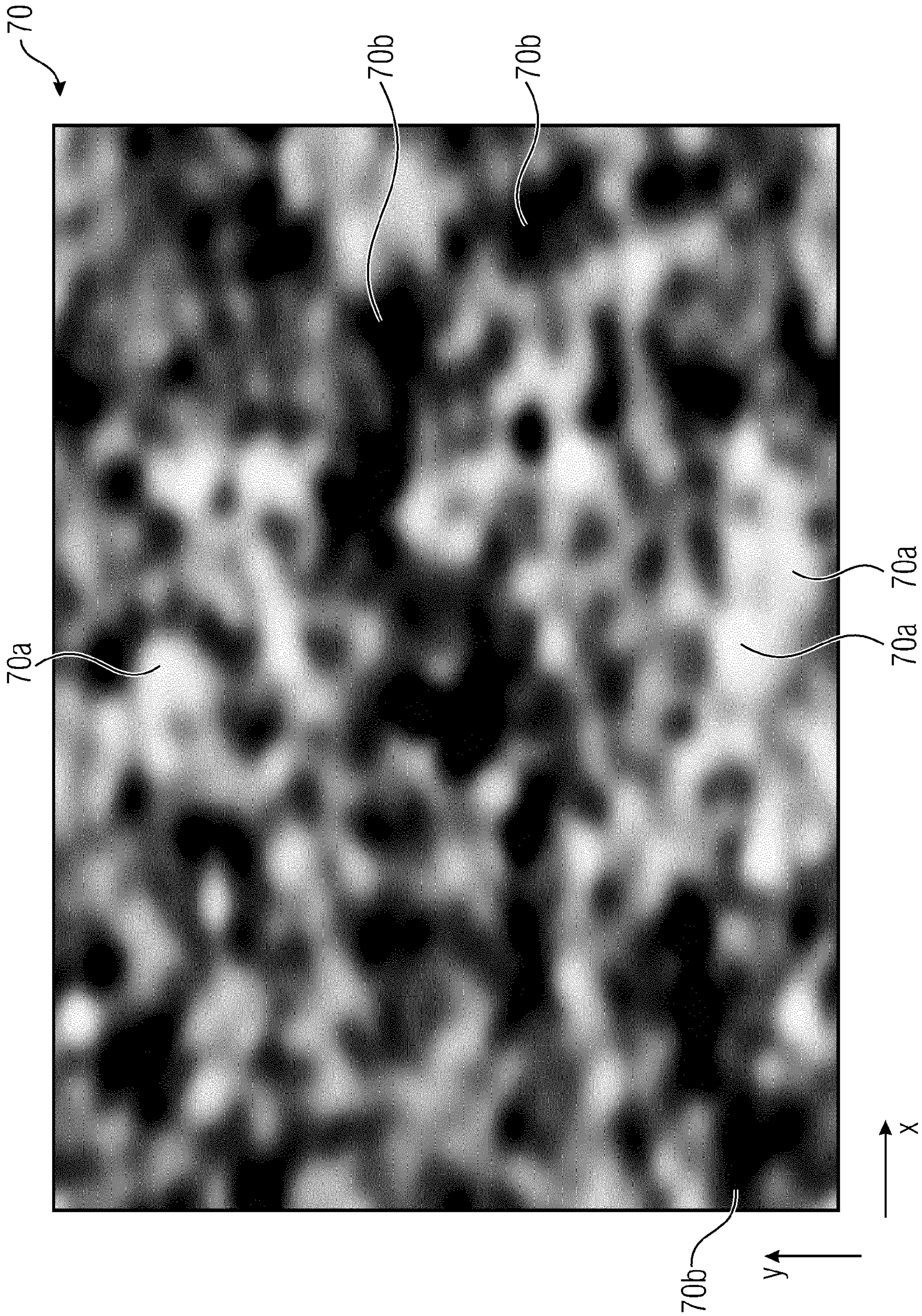


Fig. 7a

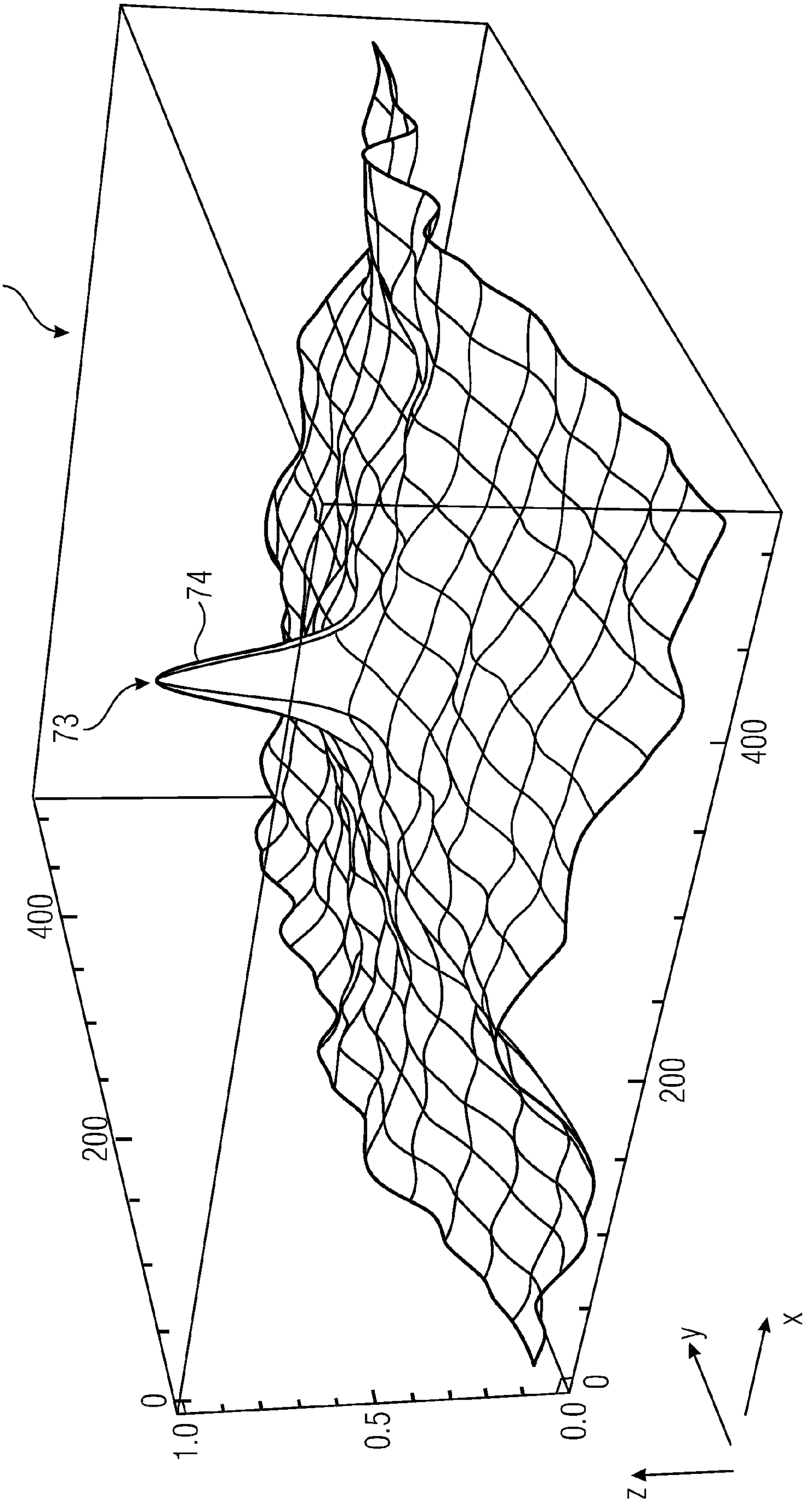


Fig. 7b

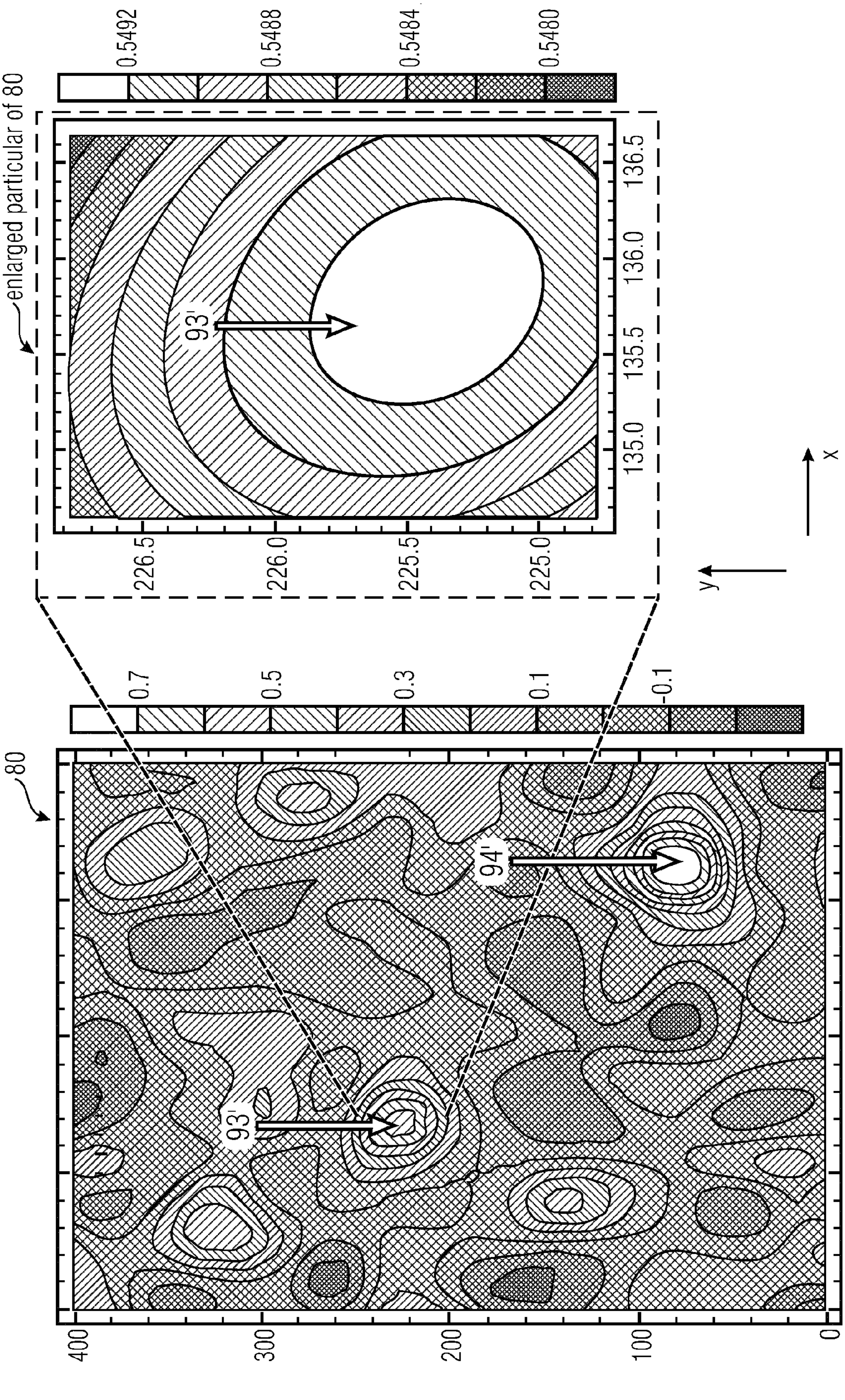
80
93'
94'
0.7
0.5
0.3
0.1
-0.1
0
100
200
300
400
enlarged particular of 80
93'
0.5492
0.5488
0.5484
0.5480
226.5
226.0
225.5
225.0
135.0
135.5
136.0
136.5
y
x

Fig. 8

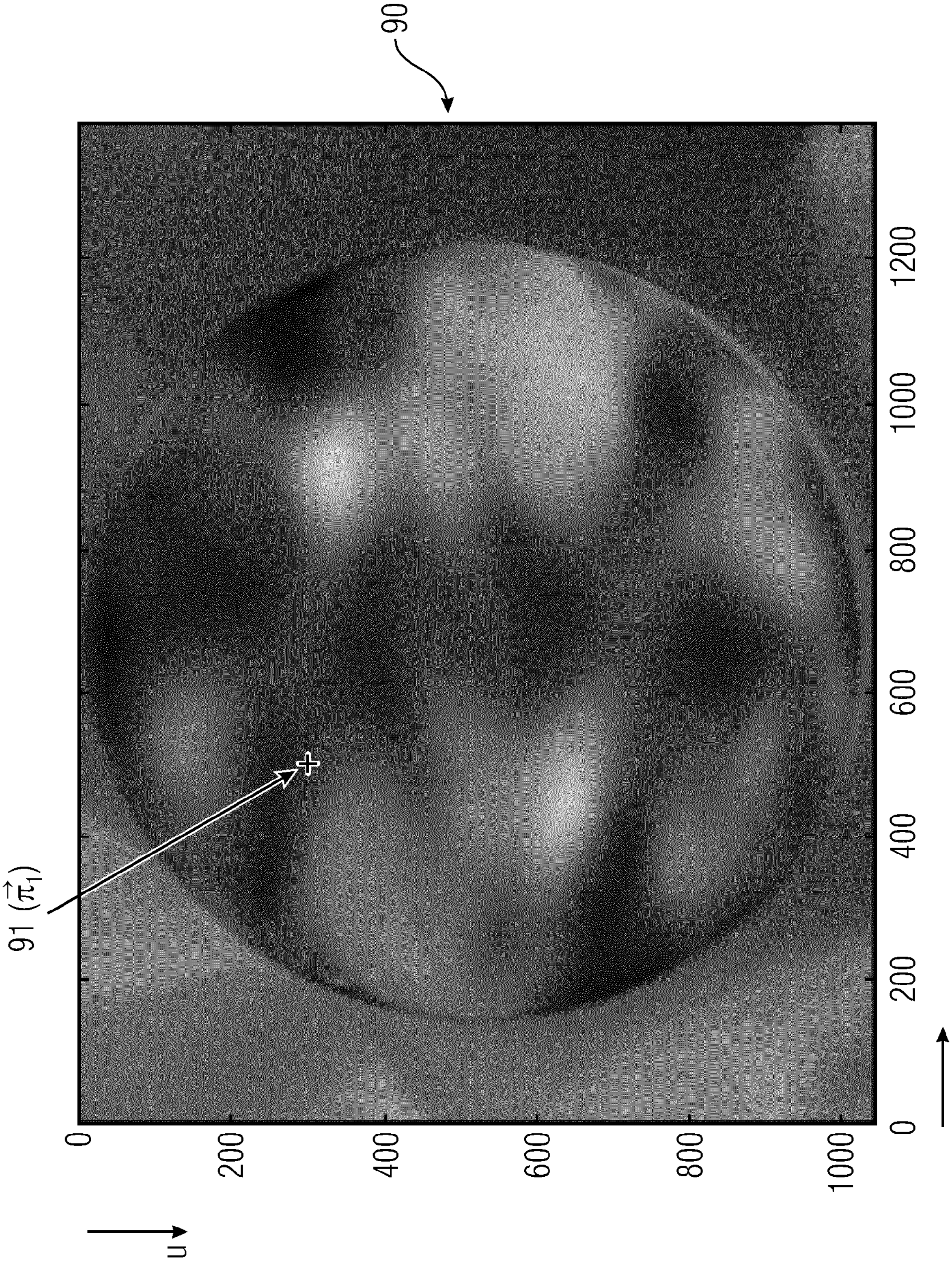


Fig. 9a

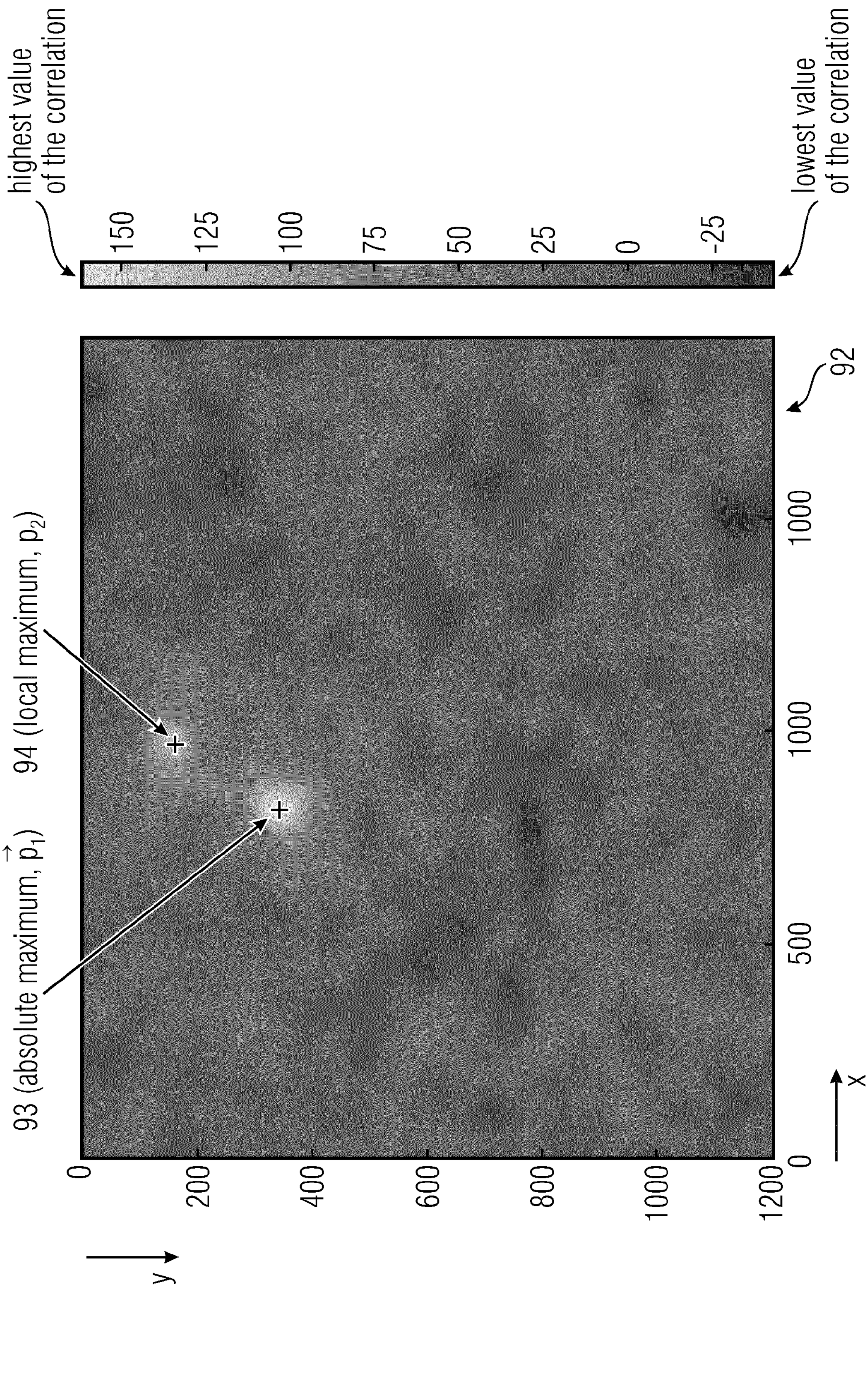
highest value
of the correlation
lowest value
of the correlation
150
125
100
75
50
25
0
-25
93 (absolute maximum, $\vec{p}_1$)
94 (local maximum, $p_2$)
92
x
y
0
200
400
600
800
1000
1200
0
500
1000
1000

Fig. 9b

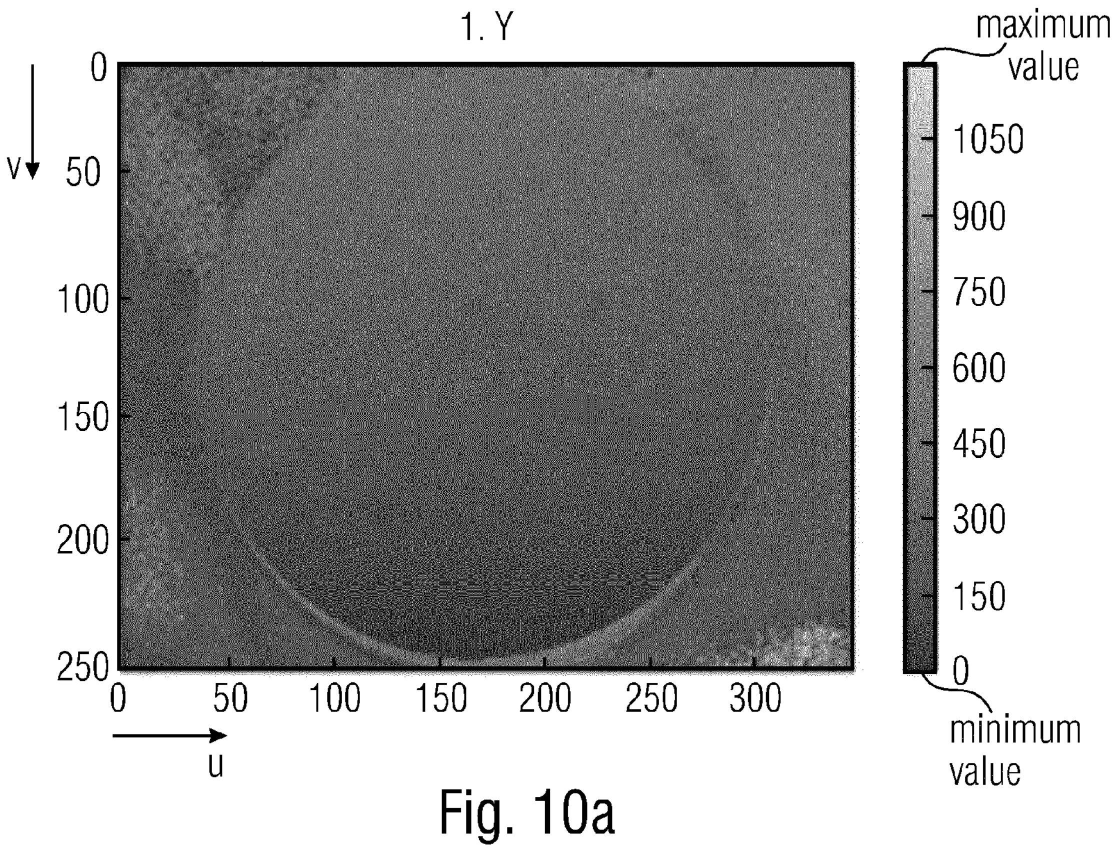


Fig. 10a

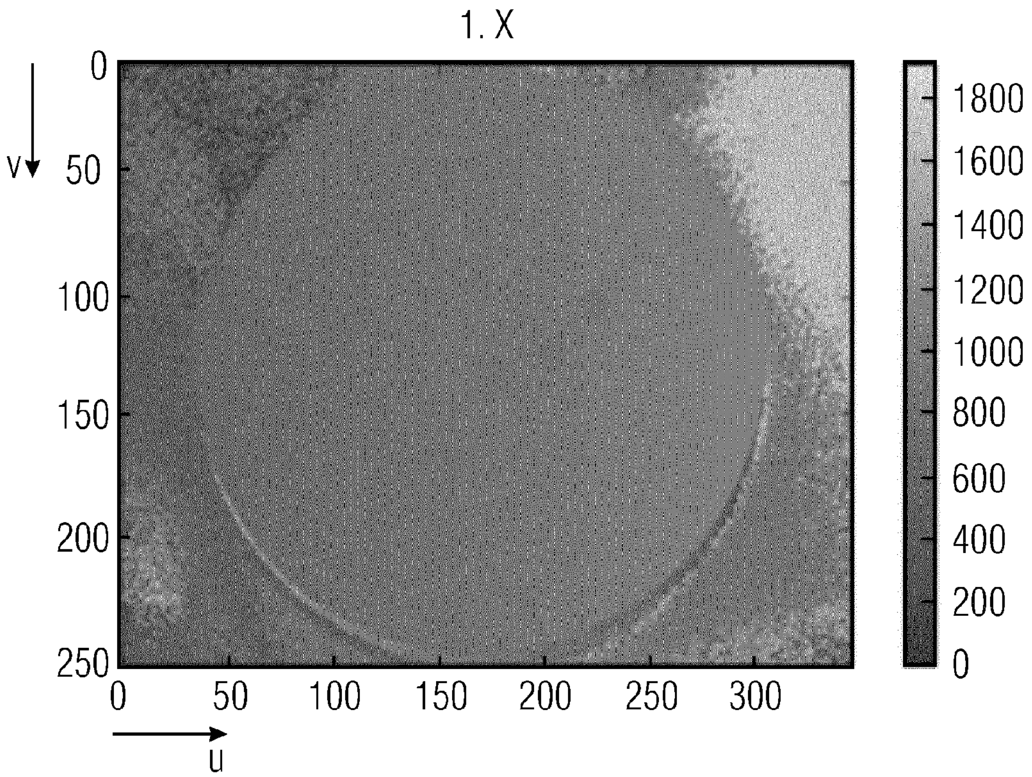


Fig. 10b

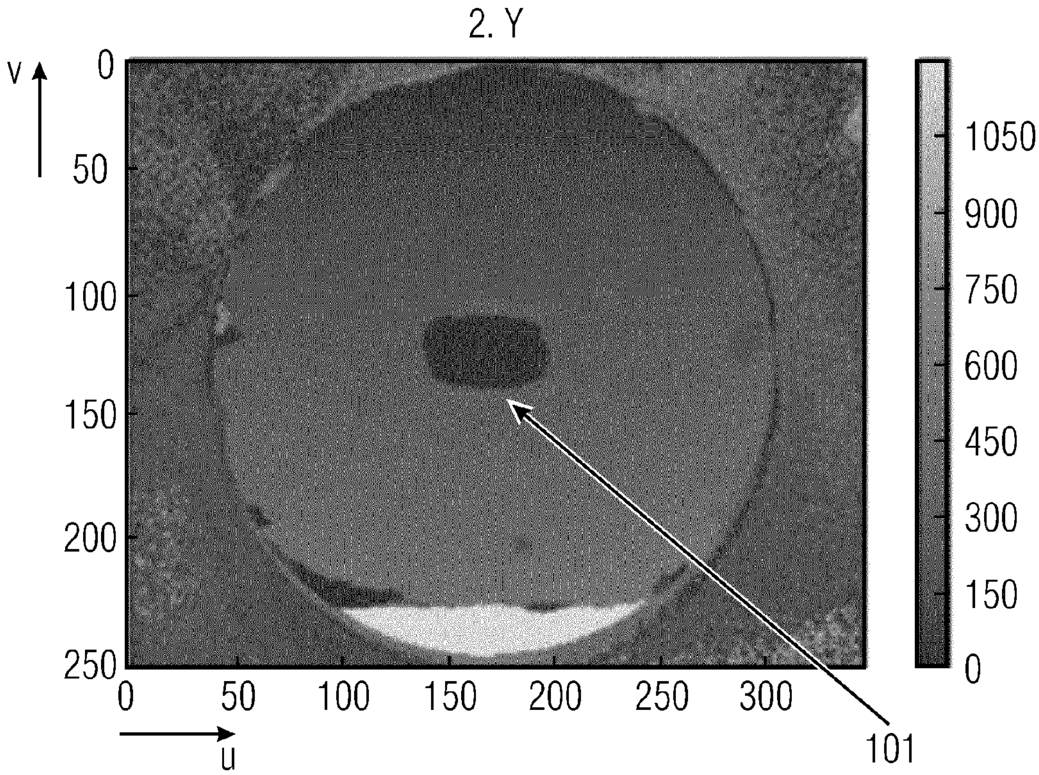


Fig. 10c

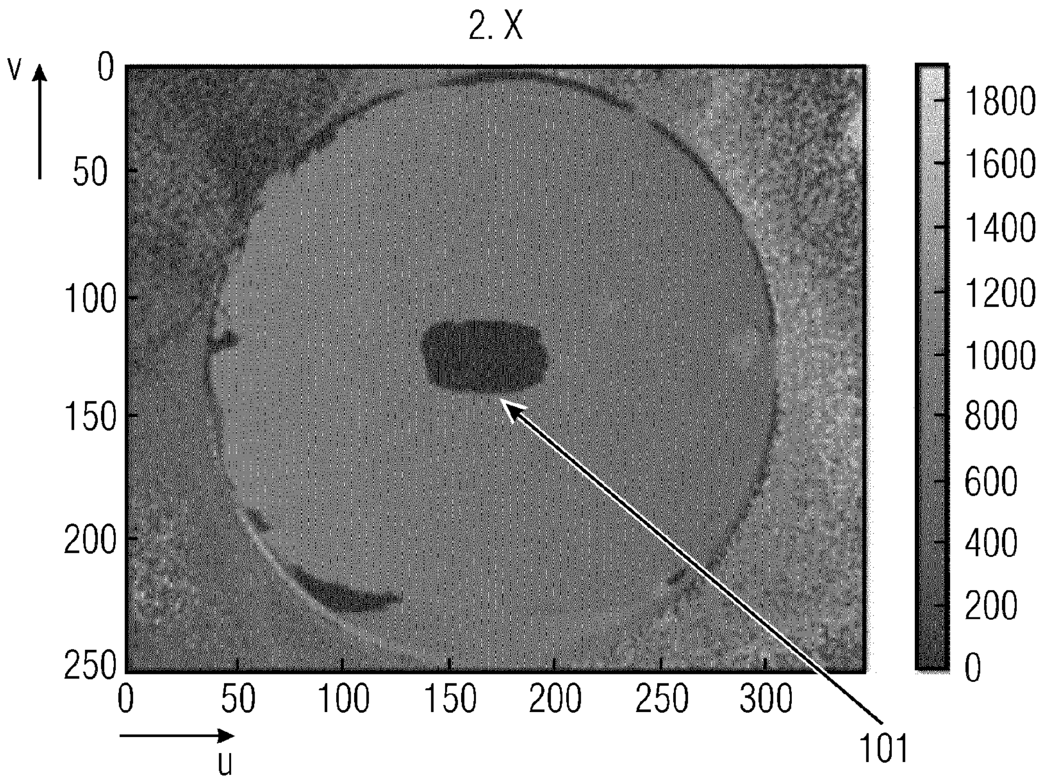


Fig. 10d

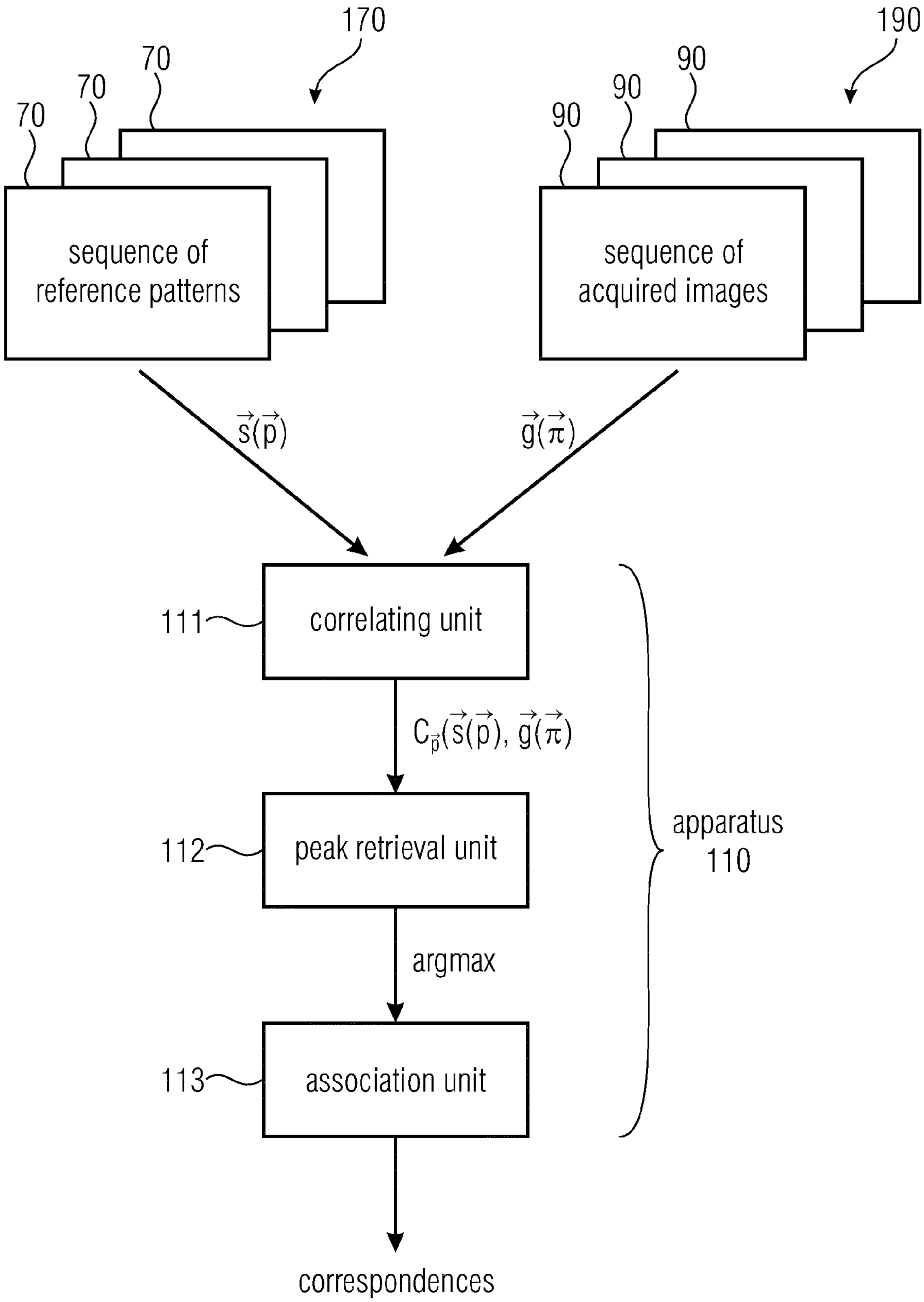
170
70
70
70
sequence of
reference patterns
190
90
90
90
sequence of
acquired images
$\vec{s}(\vec{p})$
$\vec{g}(\vec{\pi})$
111
correlating unit
$C_{\vec{p}}(\vec{s}(\vec{p}), \vec{g}(\vec{\pi}))$
112
peak retrieval unit
argmax
113
association unit
apparatus
110
correspondences

Fig. 11

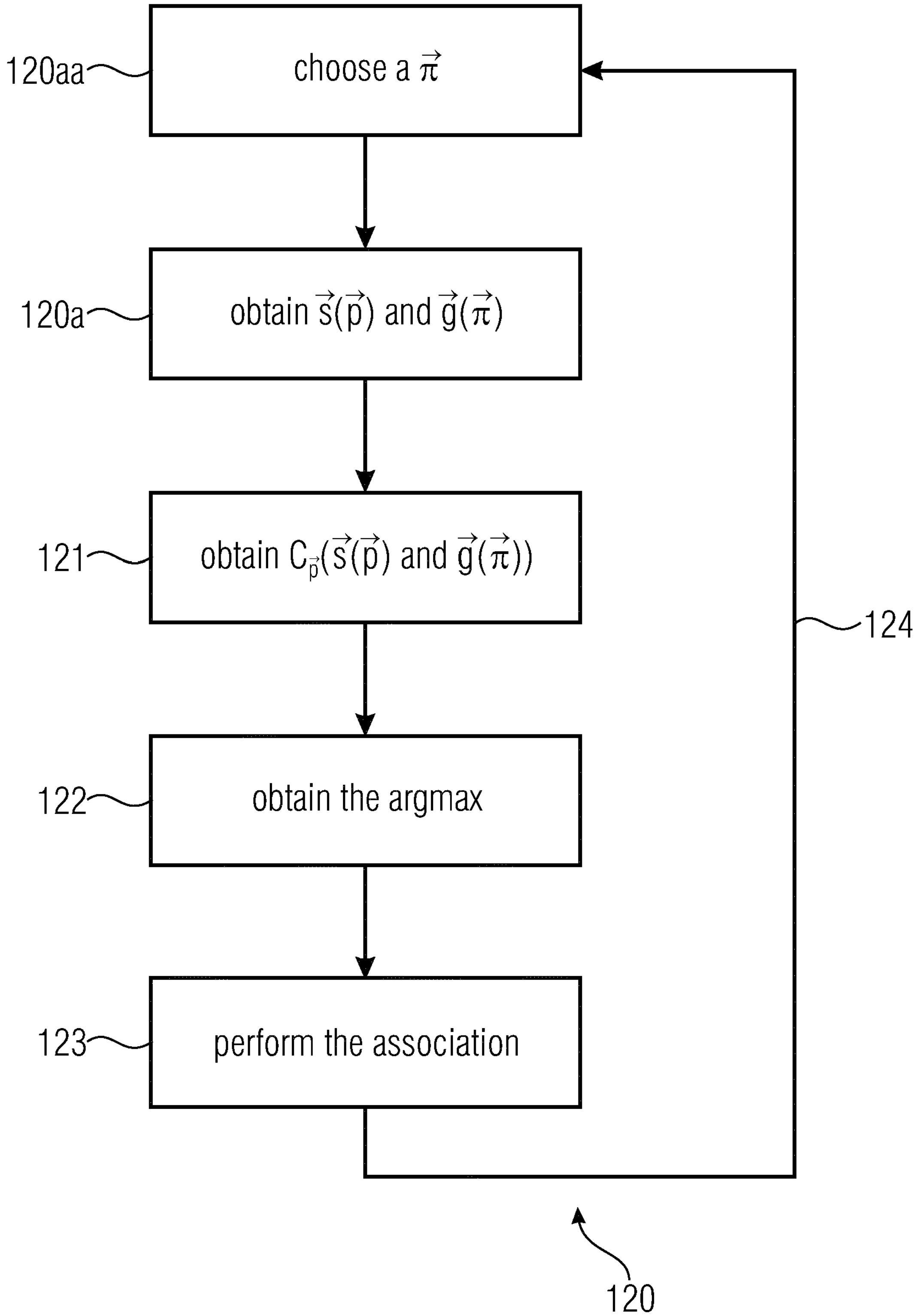
choose a $\vec{\pi}$
120aa
obtain $\vec{s}(\vec{p})$ and $\vec{g}(\vec{\pi})$
120a
obtain $C_{\vec{p}}(\vec{s}(\vec{p})$ and $\vec{g}(\vec{\pi}))$
121
obtain the argmax
122
perform the association
123
124
120

Fig. 12

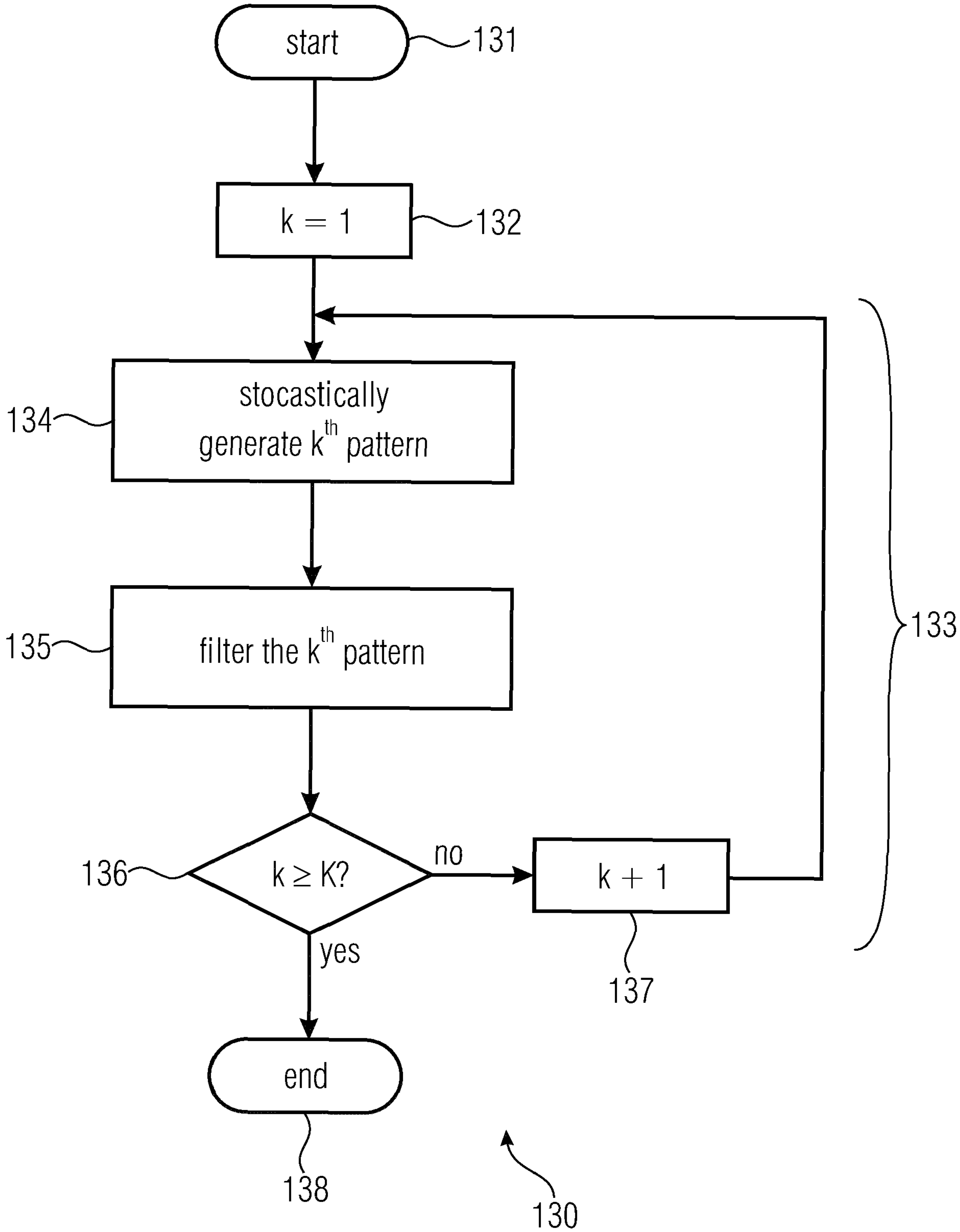
start
131
k = 1
132
stocastically generate k^th pattern
134
filter the k^th pattern
135
k ≥ K?
136
no
yes
k + 1
137
133
end
138
130

Fig. 13

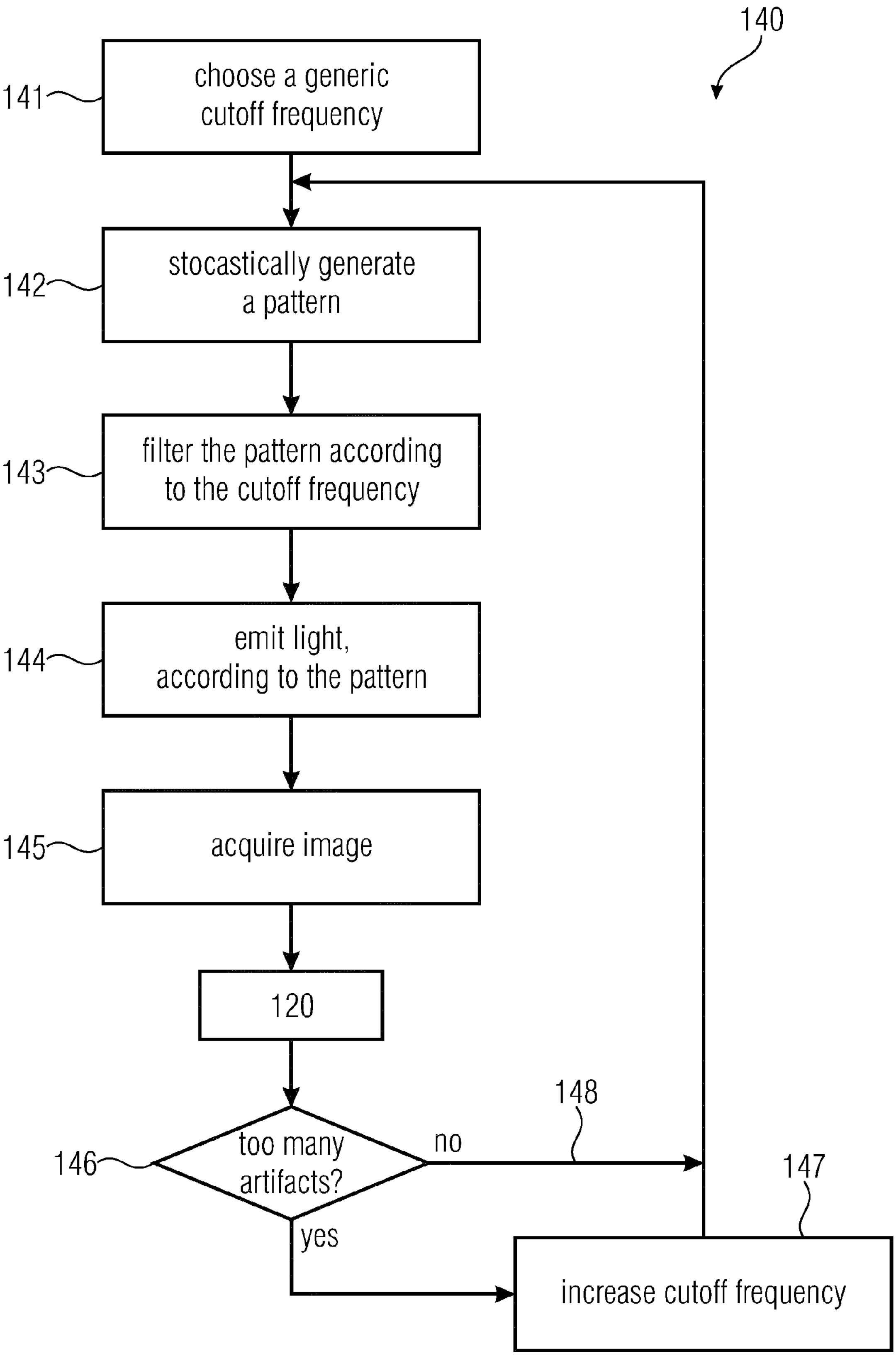
140
141
choose a generic cutoff frequency
142
stocastically generate a pattern
143
filter the pattern according to the cutoff frequency
144
emit light, according to the pattern
145
acquire image
120
146
too many artifacts?
no
148
yes
147
increase cutoff frequency

Fig. 14

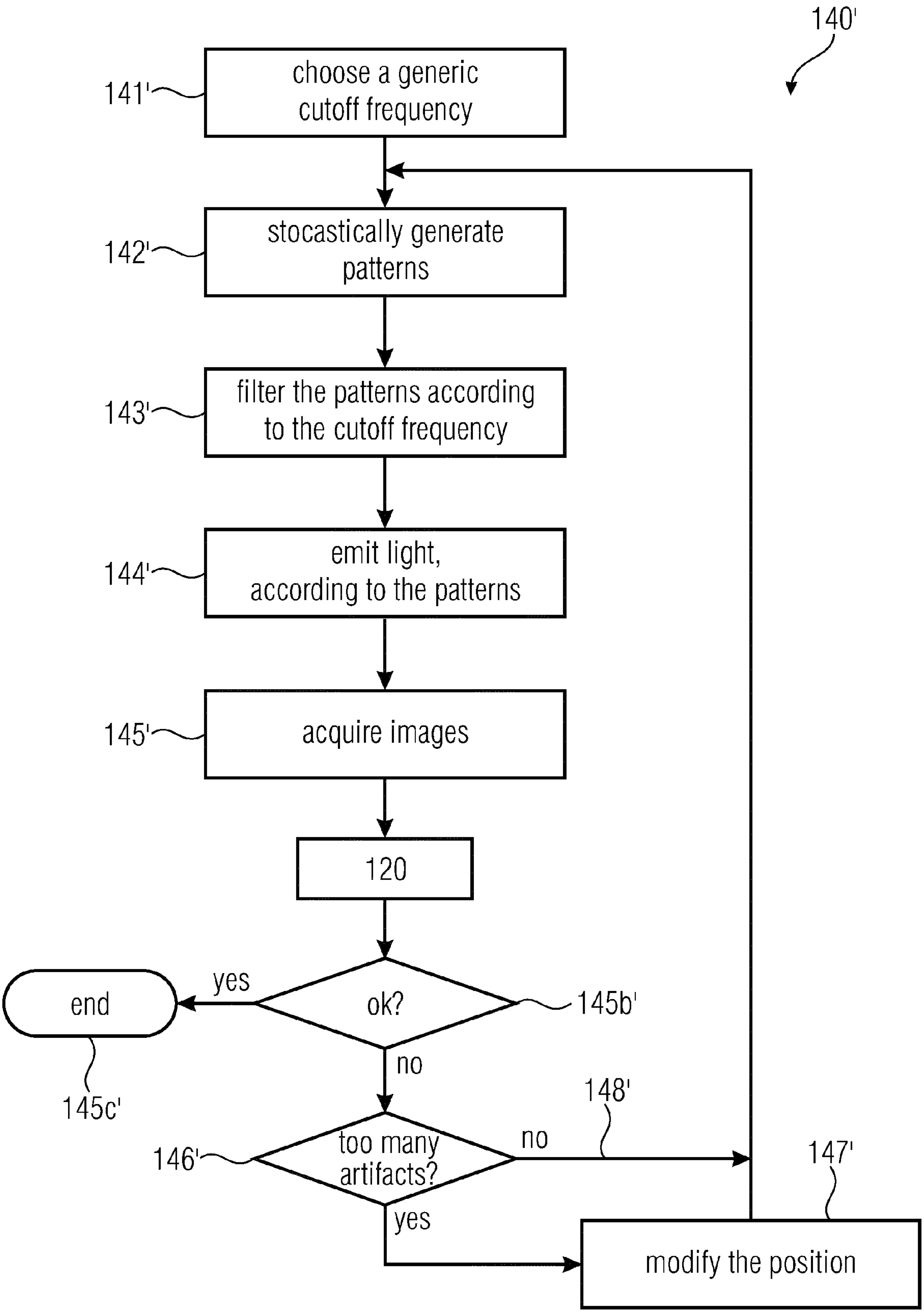
140'
141'
choose a generic cutoff frequency
142'
stocastically generate patterns
143'
filter the patterns according to the cutoff frequency
144'
emit light, according to the patterns
145'
acquire images
120
ok?
145b'
yes
end
145c'
no
too many artifacts?
146'
no
148'
yes
147'
modify the position

Fig. 15

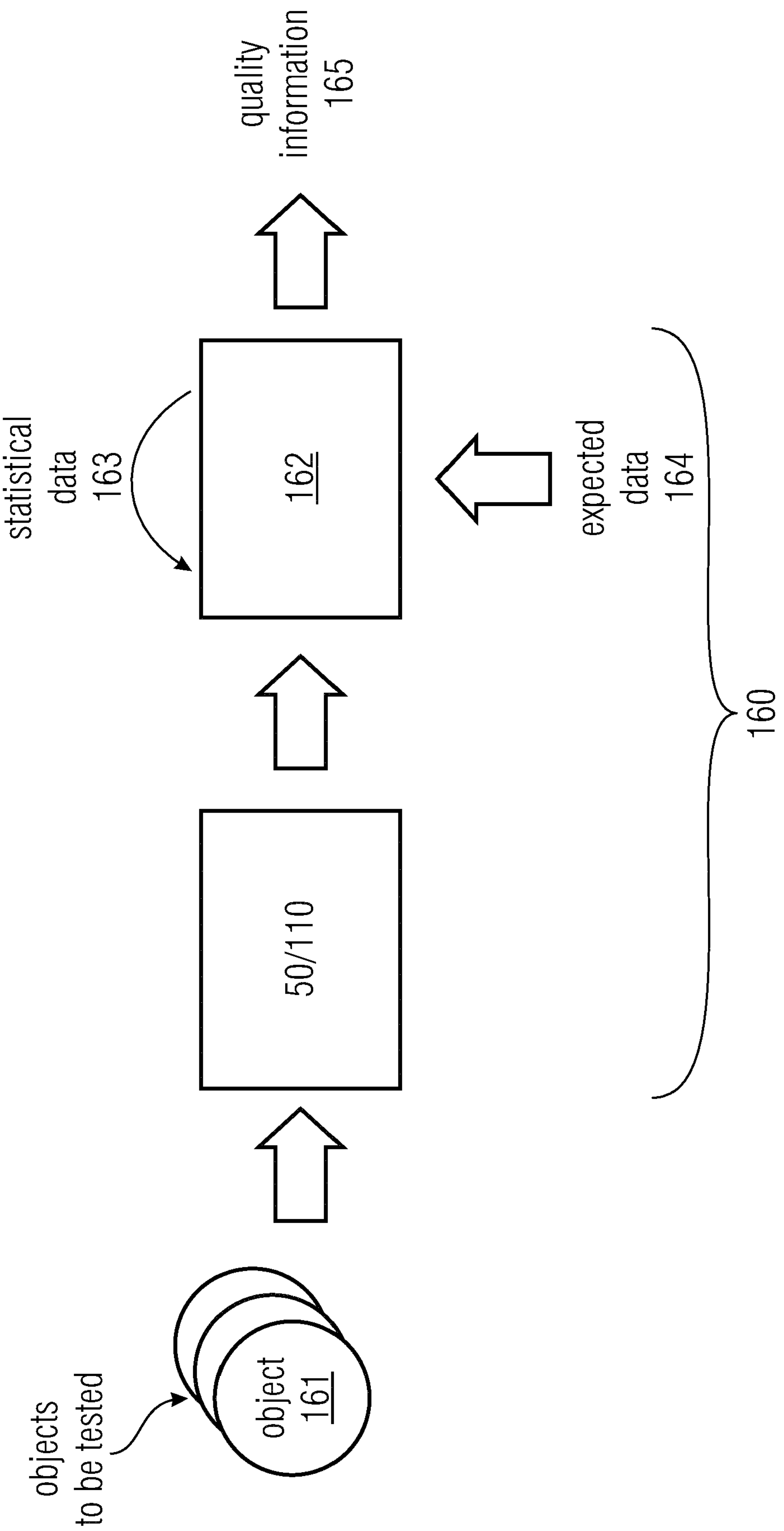
quality information 165
statistical data 163
162
expected data 164
160
50/110
objects to be tested
object 161

Fig. 16

Europäisches Patentamt
European Patent Office
Office européen des brevets

# EUROPEAN SEARCH REPORT

Application Number
EP 18 17 7112

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VINCENT COUTURE ET AL: "Unstructured Light Scanning Robust to Indirect Illumination and Depth Discontinuities", INTERNATIONAL JOURNAL OF COMPUTER VISION., vol. 108, no. 3, 26 February 2014 (2014-02-26), pages 204-221, XP055520238, US ISSN: 0920-5691, DOI: 10.1007/s11263-014-0701-0 | 1,3-17 | INV. G06T7/521 G06T7/55 G06T7/38 G06T7/33 |
| A | * section 4; figure 4 * * section 4.1, paragraph 1 * * section 4.2 * * section 5, lines 10-16 * * section 5, paragraphs 4-5 * * section 5, "Algorithm 1 Pseudo Code" * * section 5.1, paragraph 2 * * section 5.2, paragraph 2 * * section 7, lines 1-7 * * section 7, paragraph 4; figure 15 * * section 8, last 2 sentences * ----- | 2 | |
| X | ANNER KUSHNIR ET AL: "Shape from Unstructured Light", 3DTV CONFERENCE, 2007, IEEE, PI, 1 May 2007 (2007-05-01), pages 1-4, XP031158160, ISBN: 978-1-4244-0721-7 | 1,3-5, 15-17 | TECHNICAL FIELDS SEARCHED (IPC) G06T |
| A | * sections 2-2.1; figures 1-3 * * section 2.3, paragraph 1 * * sections 3-3.0.1 * * section 3.0.2, paragraphs 1-2 * ----- | 2 | |

The present search report has been drawn up for all claims

3

| Place of search | Date of completion of the search | Examiner |
|---|---|---|
| Munich | 14 November 2018 | Kollreider, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **G. BRADSKI.** *Dr. Dobb's Journal of Software Tools,* 2000
- **C. FABER ; M. KNAUER ; G. HÄUSLER.** Can deflectometry work in presence of parasitic reflections?. *Proc. DGAO,* 2009, vol. A10, 1-2
- **C. FABER ; E. OLESCH ; R. KROBOT ; G. HÄUSLER.** Deflectometry challenges interferometry; the competition gets tougher! Proc. SPIE 8493 Interferometry XVI. *Techniques and Analysis,* 2012, 84930R-84930R, 15
- **M. FISCHER ; M. PETZ ; R. TUTSCH.** Vorhersage des Phasenrauschens in optischen Messsystemen mit strukturierter Beleuchtung. tm. *Technisches Messen,* 2012, vol. 79, 451-458
- **J.-E. HA.** Automatic detection of chessboard and its applications. *Optical Engineering,* 2009, vol. 46, 067205
- **P. LUTZKE ; M. SCHAFFER ; P. KÜHMSTEDT ; R. KOWARSCHIK ; G. NOTNI.** Experimental comparison of phase-shifting fringe projection and statistical pattern projection for active triangulation systems. In Optical Measurement Systems for Industrial Inspection VIII. *Proc. SPIE,* April 2013, vol. 8788, 878813
- **A. PAK.** The concept of smooth generic camera calibration for optical metrology. tm. *Technisches Messen,* 2016, vol. 1, 25-35
- **M. SCHAFFER ; M. GROßE ; B. HARENDT ; R. KOWARSCHIK.** Statistical patterns: an approach for high-speed and high-accuracy shape measurements. *Optical Engineering,* 2014, vol. 53 (11), 112205
- **C. SCHMALZ ; F. FORSTER ; E. ANGELOPOULOU.** Camera calibration: active versus passive targets. *Optical Engineering,* 2011, vol. 50, 113601-113601, 10
- **S. WERLING ; M. MAI ; M. HEIZMANN ; J. BEYERER.** Inspection of specular and partially specular surfaces. *Metrology and Measurement Systems,* 2009, vol. 16
- **A. WIEGMANN ; H. WAGNER ; R. KOWARSCHIK.** Human face measurement by projecting bandlimited random patterns. *Opt. Express,* August 2006, vol. 14 (17), 7692-7698